# EUROPEAN PATENT APPLICATION

(11) **EP 4 742 764 A1**
(43) Date of publication of application: **13.05.2026**
(21) Application number: 24852115.5
(22) Date of filing: 19.07.2024
(51) Int. Cl.: H04W 48/16, H04B 1/401, H04B 1/50, H04W 48/18, H04W 76/50, H04W 84/06, H04W 88/06

(54) **ELECTRONIC DEVICE AND METHOD FOR SEARCHING FOR SIGNAL OF COMMUNICATION NETWORK**

(30) Priority: 08.08.2023 KR 20230103646; 21.09.2023 KR 20230126559
(71) Applicant: Samsung Electronics Co., Ltd., Suwon-si, Gyeonggi-do 16677 (KR)
(72) Inventor: OH, Shinyoung, Suwon-si Gyeonggi-do 16677 (KR); KANG, Sangook, Suwon-si Gyeonggi-do 16677 (KR); KIM, Kyoungho, Suwon-si Gyeonggi-do 16677 (KR); SEO, Hyunmin, Suwon-si Gyeonggi-do 16677 (KR)
(74) Representative: Gulde & Partner
(86) International application number: PCT/KR2024/010479
(87) International publication number: WO 2025/033759

(57) **Abstract**

Provided are an electronic device and a method for searching for a signal of a communication network. The electronic device comprises: a satellite communication module 1100 for satellite communication; a first communication module 1110 for first cellular communication; a second communication module 1120 for second cellular communication; a first power supply unit 1210 that supplies first power to the satellite communication module; a second power supply unit 1220 that supplies second power to one of the satellite communication module and the first communication module; a third power supply unit 1230 that supplies third power to the second communication module; a first antenna 1310 connected to the satellite communication module and the first communication module from among the satellite communication module, the first communication module, and the second communication module; a second antenna 1320 connected to the second communication module from among the satellite communication module, the first communication module, and the second communication module; and a communication processor 1600 connected to the satellite communication module, the first communication module, and the second communication module.

## Description

### [Technical Field]

The disclosure relates to an electronic device and a method for searching for a signal of a communication network.

### [Background Art]

Satellite communication technology is a technology for communicating via a satellite network that consists of satellites, ground stations, and terminals. Compared to communication that uses existing terrestrial networks such as long term evolution (LTE) and new radio (NR), satellite communication networks can have much wider coverage. Satellite orbits can be divided into low earth orbit (LEO), medium earth orbit (MEO), and geostationary earth orbit (GEO) depending on altitude. The satellite communication network has characteristics in which the higher the altitude, the wider the coverage of a satellite communication network and the longer a communication delay. Based on these characteristics, communication services of complementing the coverage limitations of cellular communication that uses the terrestrial networks are possible.

### [Disclosure of Invention]

### [Solution to Problem]

An embodiment of the disclosure may provide an electronic device including a satellite communication module 1100 for satellite communication, a first communication module 1110 for first cellular communication, a second communication module 1120 for second cellular communication, a first power supply unit 1210 that supplies first power to the satellite communication module, a second power supply unit 1220 that supplies second power to one of the satellite communication module and the first communication module, a third power supply unit 1230 that supplies third power to the second communication module, a first antenna 1310 connected to the satellite communication module and the first communication module from among the satellite communication module, the first communication module, and the second communication module, a second antenna 1320 connected to the second communication module from among the satellite communication module, the first communication module, and the second communication module, and a communication processor 1600 connected to the satellite communication module, the first communication module, and the second communication module.

In addition, the communication processor may control the first power supply unit and the second power supply unit to supply the first power and the second power to the satellite communication module in order to transmit and/or receive a signal of the satellite communication through the first antenna.

In addition, while the first power and the second power are being supplied to the satellite communication module, the communication processor may search for a signal of the second cellular communication received through the second antenna by supplying the third power to the second communication module.

In addition, an embodiment of the disclosure may provide a method for searching for a signal of a cellular communication network in an electronic device that is using a satellite communication network including operation of providing first power from a first power supply unit 1210 and second power from a second power supply unit 1220 to a satellite communication module 1100 for satellite communication, from among the satellite communication module and a first communication module 1110 for first cellular communication, wherein the second power supply unit is configured to provide the second power to one of the satellite communication module and the first communication module, and wherein the satellite communication module and the first communication module are connected to a first antenna, operation of, while the first power and the second power are being supplied to the satellite communication module, supplying third power from a third power supply unit 1230 to a second communication module 1120 for second cellular communication, wherein the second communication module is connected to a second antenna different from the first antenna, and operation of searching for a signal of the second cellular communication received through the second antenna.

### [Brief Description of Drawings]

FIG. 1 is a block diagram of an electronic device 101 within a network environment 100, according to various embodiments.
FIG. 2 is a block diagram 200 of an electronic device 101 for supporting legacy network communication and 5G network communication, according to various embodiments.
FIG. 3 is a diagram illustrating an electronic device located within satellite communication coverage and/or cellular communication coverage according to an embodiment of the disclosure.
FIG. 4 is a block diagram of an electronic device according to an embodiment of the disclosure.
FIG. 5 is a block diagram of an electronic device according to an embodiment of the disclosure.
FIG. 6A is a diagram illustrating an example of an electronic device including various communication modules and various antennas for searching for a cellular communication signal during satellite communication, according to an embodiment of the disclosure.
FIG. 6B is a diagram illustrating an example of an electronic device including various communication modules and various antennas for searching for a cellular communication signal during satellite communication, according to an embodiment of the disclosure.
FIG. 7 is a cross-sectional view illustrating an example of a position in which an antenna is arranged in an electronic device, according to an embodiment of the disclosure.
FIG. 8 is a flowchart illustrating a method for searching for a cellular communication signal during satellite communication in an electronic device, according to an embodiment of the disclosure.
FIG. 9 is a diagram illustrating a process for switching a communication mode of an electronic device between a general communication mode and a satellite communication mode, according to an embodiment of the disclosure.
FIG. 10 is a diagram illustrating an example of a GUI displayed on a screen of an electronic device for satellite communication, according to an embodiment of the disclosure.
FIG. 11 is a diagram illustrating an example of a GUI for displaying the result of searching for a cellular network in a satellite communication mode, according to an embodiment of the disclosure.
FIG. 12 is a diagram illustrating an example of a GUI displayed on a screen of an electronic device after switching from a satellite communication mode to a general communication mode, according to an embodiment of the disclosure.

### [Mode For the Invention]

Embodiments of the disclosure will be described below in detail with reference to the accompanying drawings so that the embodiments of the disclosure may be easily embodied by those skilled in the art to which the disclosure pertains. However, the disclosure may be implemented in various different forms and is not limited to the embodiments described herein. In addition, in order to clearly describe the disclosure in the drawings, portions not related to the description are omitted, and similar portions are given similar reference numerals throughout the specification.

The terms used in the disclosure are described as general terms currently used in consideration of functions mentioned in the disclosure, but this may mean various other terms depending on the intention of engineers engaged in the relevant field, precedents, the emergence of new technologies, etc. Therefore, the terms used in the disclosure should not be interpreted solely based on the names of the terms, but should be interpreted based on the meanings of the terms and the overall contents of the disclosure.

In addition, terms such as first, second, etc. may be used to describe various components, but the components should not be limited by these terms. These terms are used for the purpose of distinguishing one component from another component.

Throughout the specification, when a certain portion is said to be "connected" to another portion, this includes not only a case where it is "directly connected" but also a case where it is "electrically connected" with another element arranged therebetween. In addition, when a certain portion is said to "include" a certain component, this does not mean excluding another component but rather means further including another component, unless specifically stated otherwise.

Phrases such as "in an embodiment" appearing in various places in the disclosure do not necessarily all refer to the same embodiment.

An embodiment of the disclosure may be represented by functional block constructions and various processing operations. Some or all of these functional blocks may be implemented by various numbers of hardware and/or software constructions performing specific functions. For example, the functional blocks of the disclosure may be implemented by one or more microprocessors or be implemented by circuit constructions for a specific function. In addition, for example, the functional blocks of the disclosure may be implemented by various programming or scripting languages. The functional blocks may be implemented by algorithms that are executed by one or more processors. In addition, the disclosure may employ the prior art for the sake of electronic configuration, signal processing, and/or data processing, etc. Terms such as "mechanism," "element," "means," and "construction" may be used broadly, and are not limited to mechanical and physical constructions.

In addition, connection lines or connection members between components illustrated in the drawings exemplarily merely represent functional connections and/or physical or circuit connections. In an actual device, connections between the components may be represented by replaceable or added various functional connections, physical connections, or circuit connections.

The disclosure will be described in detail below with reference to the accompanying drawings.

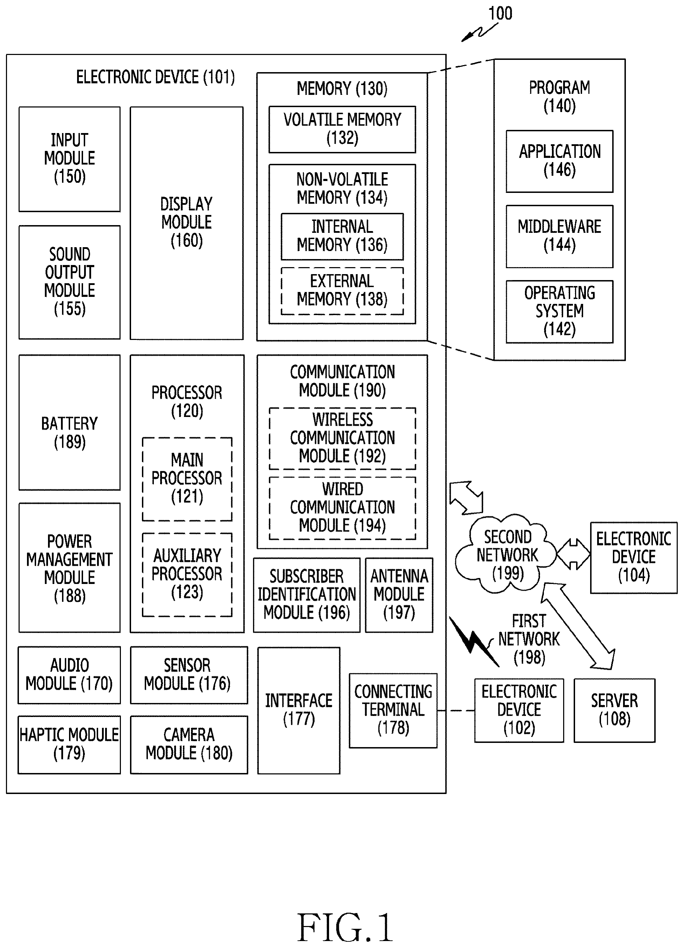

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

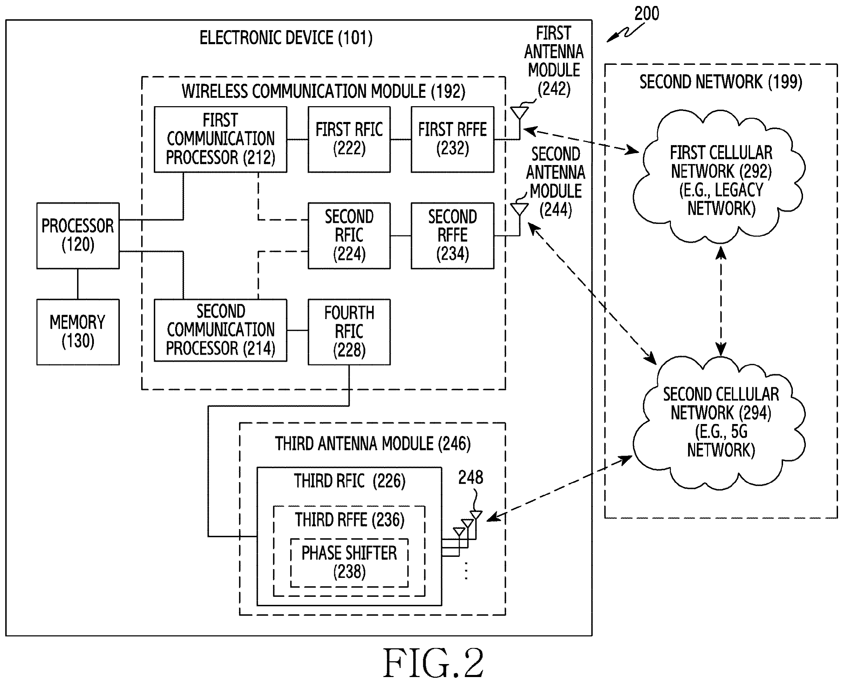

FIG. 2 is a block diagram 200 illustrating an example electronic device 101 in a network environment including a plurality of cellular networks according to various embodiments. Referring to FIG. 2, an electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor (e.g., including processing circuitry) 120 and a memory 130. The second network 199 may include a first type cellular network 292 and a second type cellular network 294. According to another embodiment, the electronic device may further include at least one of the parts shown in FIG. 1 and the second network 199 may further include at least one another network. According to an embodiment, the first communication processor 212, the second communication processor 214, the first RFIC 222, the second RFIC 224, the fourth RFIC 228, the first RFFE 232, and the second RFFE 234 may form at least a portion of a wireless communication module 192. According to another embodiment, the fourth RFIC 228 may be omitted or may be included as a portion of the third RFIC 226.

The first communication processor 212 can support establishment of a communication channel with a band to be used for wireless communication with the first type cellular network 292 and legacy network communication through the established communication channel. According to various embodiments, the first type cellular network may be a legacy network including a 2G, 3G, 4G, or Long-Term Evolution (LTE) network. The second communication processor 214 can support establishment of a communication channel corresponding to a designated band (e.g., about 6GHz ~ about 60GHz) of a band to be used for wireless communication with the second type cellular network 294 and 5G network communication through the established communication channel. According to various embodiments, the second type cellular network 294 may be a 5G network that is defined in 3GPP. Further, according to an embodiment, the first communication processor 212 or the second communication processor 214 can support establishment of a communication channel corresponding to another designated band (e.g., about 6GHz or less) of a band to be used for wireless communication with the second type cellular network 294 and 5G network communication through the established communication channel. According to an embodiment, the first communication processor 212 and the second communication processor 214 may be implemented in a single chip or a single package. According to various embodiments, the first communication processor 212 or the second communication processor 214 may be disposed in a single chip or a single package together with the processor 120, the auxiliary processor 123, or the communication module 190. According to an embodiment, the first communication processor 212 and the second communication processor 214 is directly or indirectly connected by an interface (not shown), thereby being able to provide or receive data or control signal in one direction or two directions.

The first RFIC 222, in transmission, can converts a baseband signal generated by the first communication processor 212 into a radio frequency (RF) signal of about 700MHz to about 3GHz that is used for the first type cellular network 292 (e.g., a legacy network). In reception, an RF signal can be obtained from the first type cellular network 292 (e.g., a legacy network) through an antenna (e.g., the first antenna module 242) and can be preprocessed through an RFFE (e.g., the first RFFE 232). The first RFIC 222 can covert the preprocessed RF signal into a baseband signal so that the preprocessed RF signal can be processed by the first communication processor 212.

The second RFIC 224 can convert a baseband signal generated by the first communication processor 212 or the second communication processor 214 into an RF signal in a Sub6 band (e.g., about 6GHz or less) (hereafter, 5G Sub6 RF signal) that is used for the second type cellular network 294 (e.g., a 5G network). In reception, a 5G Sub6 RF signal can be obtained from the second type cellular network 294 (e.g., a 5G network) through an antenna (e.g., the second antenna module 244) and can be preprocessed through an RFFE (e.g., the second RFFE 234). The second RFIC 224 can convert the processed 5G Sub6 RF signal into a baseband signal so that the processed 5G Sub6 RF signal can be processed by a corresponding communication processor of the first communication processor 212 or the second communication processor 214.

The third RFIC 226 can convert a baseband signal generated by the second communication processor 214 into an RF signal in a 5G Above6 band (e.g., about 6GHz ~ about 60GHz) (hereafter, 5G Above6 RF signal) that is used for the second type cellular network 294 (e.g., a 5G network). In reception, a 5G Above6 RF signal can be obtained from the second type cellular network 294 (e.g., a 5G network) through an antenna (e.g., the antenna 248) and can be preprocessed through the third RFFE 236. The third RFIC 226 can covert the preprocessed 5G Above6 RF signal into a baseband signal so that the preprocessed 5G Above6 RF signal can be processed by the first communication processor 214. According to an embodiment, the third RFFE 236 may be provided as a portion of the third RFIC 226.

The electronic device 101, according to an embodiment, may include a fourth RFIC 228 separately from or as at least a portion of the third RFIC 226. In this case, the fourth RFIC 228 can convert a baseband signal generated by the second communication processor 214 into an RF signal in an intermediate frequency band (e.g., about 9GHz ~ about 11GHz) (hereafter, IF signal), and then transmit the IF signal to the third RFIC 226. The third RFIC 226 can convert the IF signal into a 5G Above6 RF signal. In reception, a 5G Above6 RF signal can be received from the second type cellular network 294 (e.g., a 5G network) through an antenna (e.g., the antenna 248) and can be converted into an IF signal by the third RFIC 226. The fourth RFIC 228 can covert the IF signal into a baseband signal so that IF signal can be processed by the second communication processor 214.

According to an embodiment, the first RFIC 222 and the second RFIC 224 may be implemented as at least a portion of a single chip or a single package. According to an embodiment, the first RFFE 232 and the second RFFE 234 may be implemented as at least a portion of a single chip or a single package. According to an embodiment, at least one of the first antenna module 242 or the second antenna module 244 may be omitted, or may be combined with another antenna module and can process RF signals in a plurality of bands.

According to an embodiment, the third RFIC 226 and the antenna 248 may be disposed on a substrate, thereby being able to form a third antenna module 246. For example, the wireless communication module 192 or the processor 120 may be disposed on a first substrate (e.g., a main PCB). In this case, the third RFIC 226 may be disposed in a partial area (e.g., the bottom) and the antenna 248 may be disposed in another partial area (e.g., the top) of a second substrate (e.g., a sub PCB) that is different from the first substrate, thereby being able to form the third antenna module 246. By disposing the third RFIC 226 and the antenna 248 on the same substrate, it is possible to reduce the length of the transmission line therebetween. Accordingly, it is possible to reduce a loss (e.g., attenuation) of a signal in a high-frequency band (e.g., about 6GHz ~ about 60 GHz), for example, which is used for 5G network communication, due to a transmission line. Accordingly, the electronic device 101 can improve the quality and the speed of communication with the second type cellular network 294 (e.g., 5G network).

According to an embodiment, the antenna 248 may be an antenna array including a plurality of antenna elements that can be used for beamforming. In this case, the third RFIC 226, for example, as a portion of the third RFFE 236, may include a plurality of phase shifters 238 corresponding to the antenna elements. In transmission, the phase shifters 238 can convert the phase of a 5G Above6 RF signal to be transmitted to the outside of the electronic device 101 (e.g., to a base station of a 5G network) through the respectively corresponding antenna elements. In reception, the phase shifters 238 can convert the phase of a 5G Above6 RF signal received from the outside through the respectively corresponding antenna element into the same or substantially the same phase. This enables transmission or reception through beamforming between the electronic device 101 and the outside.

The second type cellular network 294 (e.g., a 5G network) may be operated independently from (e.g., Stand-Along (SA)) or connected and operated with (e.g., Non-Stand Along (NSA)) the first type cellular network 292 (e.g., a legacy network). For example, there may be only an access network (e.g., a 5G radio access network (RAN) or a next generation RAN (NG RAN)) and there is no core network (e.g., a next generation core (NGC)) in a 5G network. In this case, the electronic device 101 can access the access network of the 5G network and then can access an external network (e.g., the internet) under control by the core network (e.g., an evolved packed core (EPC)) of the legacy network. Protocol information (e.g., LTE protocol information) for communication with a legacy network or protocol information (e.g., New Radio (NR) protocol information) for communication with a 5G network may be stored in the memory 230 and accessed by another part (e.g., the processor 120, the first communication processor 212, or the second communication processor 214).

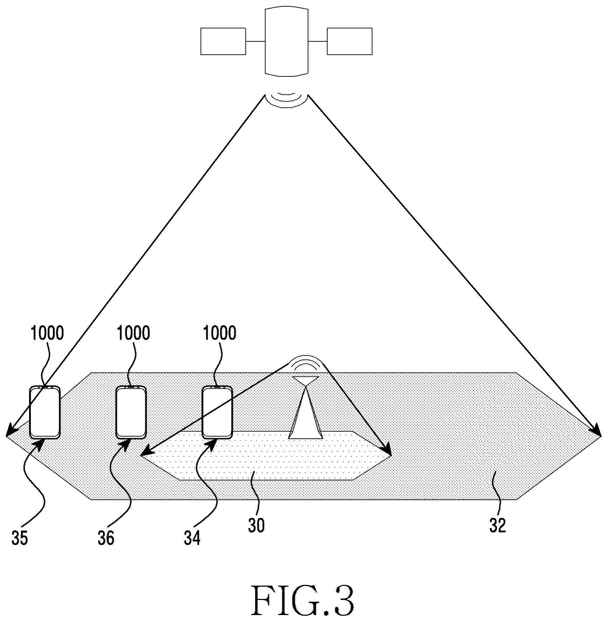

FIG. 3 is a diagram illustrating an electronic device located within the coverage of a satellite communication network and/or the coverage of a cellular communication network, according to an embodiment of the disclosure.

Referring to FIG. 3, as an electronic device 1000 is located within the coverage 30 of a cellular communication network and/or the coverage 32 of a satellite communication, the electronic device 1000 of an embodiment may transmit and receive a signal with an external device (not shown) by using the satellite communication network and/or the cellular communication network. According to an embodiment, the satellite communication network may be a non-terrestrial network, and the cellular communication network may be a terrestrial network.

For example, the electronic device 1000 may be located at a first location 34 within the coverage 30 of the cellular communication network and the coverage 32 of the satellite communication network, and the electronic device 1000 located at the first location 34 may transmit and receive a signal with an external device (not shown) by using the satellite communication and the cellular communication.

For example, the electronic device 1000 may be located at a second location 35 within the coverage 32 of the satellite communication network out of the coverage 30 of the cellular communication network, and the electronic device 1000 located at the second location 35 may not use the cellular communication network, and may transmit and receive a signal with an external device (not shown) by using only the satellite communication network.

For example, the electronic device 1000 may be located at a third location 36, which is a boundary portion of the coverage 30 of the cellular communication network, within the coverage 32 of the satellite communication network. In this case, since the electronic device 1000 located at the third location 36 is located at the boundary portion of the coverage 30 of the cellular communication network, as the direction in which the electronic device 1000 moves or faces is changed, the electronic device 1000 may, or may not, search for a signal of the cellular communication network.

According to an embodiment, when the electronic device 1000 needs to make a call (e.g., emergency call) in a situation of getting out from the coverage 30 of the cellular communication network, the electronic device 1000 may transmit and receive a signal (e.g., SOS signal) via the satellite communication network. In this case, while being transmitting and receiving a signal via the satellite communication, the electronic device 1000 may simultaneously search for a signal of the cellular communication network, in order to be able to transmit and receive a signal via the cellular communication network.

According to an embodiment, the electronic device 1000 may search for a signal of a cellular communication network by using a cellular communication module of which the use of the antenna and/or the use of the power supply unit do not overlap with those of a satellite communication module.

According to an embodiment, the electronic device 1000 may be a smart phone, a tablet PC, a personal computer (PC), a smart TV, a mobile phone, a personal digital assistant (PDA), a laptop computer, a media player, a global positioning system (GPS) device, an e-book terminal, a digital broadcasting terminal, a navigation device, a kiosk, an MP3 player, a digital camera, and other mobile or non-mobile computing devices, but is not limited thereto. In addition, the electronic device 1000 may be a wearable device, such as a watch, glasses, a hair band, a ring, etc., having a communication function and a data processing function. However, it is not limited thereto, and the device 1000 may include all types of devices capable of transmitting and receiving data over a network.

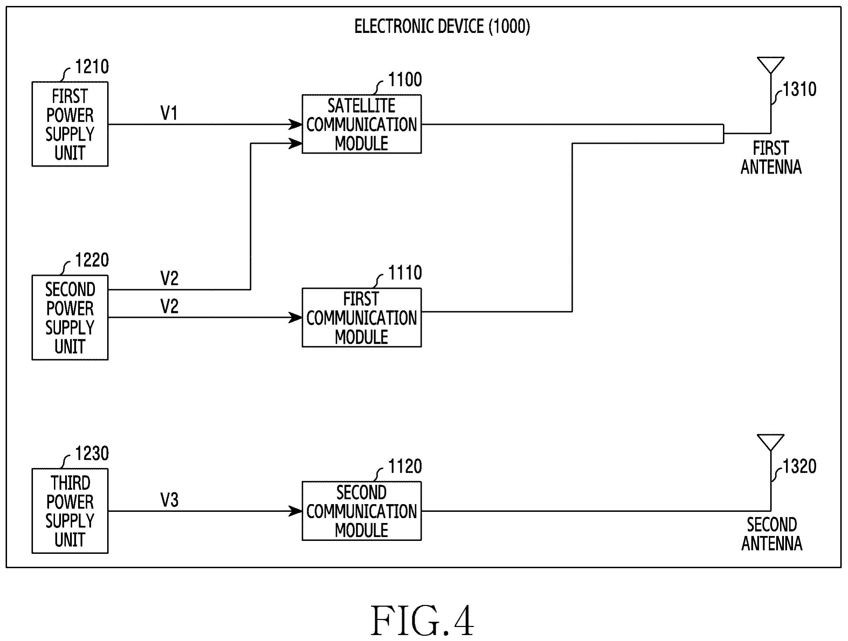

FIG. 4 is a block diagram of an electronic device according to an embodiment of the disclosure.

An electronic device 1000 of FIG. 4 may correspond to the electronic device 101 of FIGS. 1 and 2, and may include at least some of the components included in the electronic device 101 illustrated in FIGS. 1 and 2.

Referring to FIG. 4, the electronic device 1000 of an embodiment of the disclosure may include a satellite communication module 1100, a first communication module 1110, a second communication module 1120, a first power supply unit 1210, a second power supply unit 1220, a third power supply unit 1230, a first antenna 1310, and a second antenna 1320.

The satellite communication module 1100 of an embodiment may be a communication module for satellite communication. The satellite communication module 1100 may include a communication circuit for transmitting and/or receiving a signal of a satellite communication band supported by the electronic device 1000. For example, a frequency band of satellite communication supported by the electronic device 1000 may include at least some of the Ka band, Ku band, C band, L band, and S band, but are not limited thereto.

The satellite communication module 1100 of an embodiment may be connected to the first antenna 1310 of the electronic device 1000, and may transmit and/or receive a signal for satellite communication through the first antenna 1310. The first antenna 1310 may have an electrical length for radiating a signal of a satellite communication band.

The satellite communication module 1100 of an embodiment may include a power amplifier for amplifying the power of a signal for satellite communication. The power amplifier within the satellite communication module 1100 may receive first power V1 from the first power supply unit 1210 to be described later and second power V2 from the second power supply unit 1220. Since a high-power signal must be radiated from the satellite communication module 1100 through the first antenna 1310 for the purpose of satellite communication, the satellite communication module 1100 may receive a plurality of power (e.g., first power V1 and second power V2) from a plurality of power supply units (e.g., first power supply unit 1210 and second power supply unit 1220).

The first communication module 1110 of an embodiment may be a communication module for cellular communication, and may be a communication module for transmitting and/or receiving a signal of a specified first frequency band among frequency bands for cellular communication supported by the electronic device 1000. For example, the specified first frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the first frequency band may include a frequency band of a signal that may be radiated through the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The first communication module 1110 of an embodiment may be electrically connected to the first antenna 1310 of the electronic device 1000, and may transmit and/or receive a signal for cellular communication through the first antenna 1310. The first antenna 1310 may have an electrical length for radiating a signal of a specified first frequency band of cellular communication.

The first communication module 1110 of an embodiment may include a communication circuit for transmitting and/or receiving a signal of a specified first frequency band among frequency bands of cellular communication supported by the electronic device 1000. For example, the first communication module 1110 may include a power amplifier for amplifying the power of a signal for communication of a first frequency band. The power amplifier within the first communication module 1110 may receive second power V2 from the second power supply unit 1220 to be described below.

The first communication module 1110 and the satellite communication module 1100 of an embodiment may be each electrically connected to the first antenna 1310, and the first communication module 1110 may share the first antenna 1310 with the satellite communication module 1100. The first communication module 1110 of an embodiment may transmit and/or receive a cellular communication signal by using the first antenna 1310 that may be used by the satellite communication module 1100. However, the use of the first antenna 1310 by the first communication module 1110 of an embodiment may not overlap with the use of the first antenna 1310 by the satellite communication module 1100. The transmission and reception of a cellular communication signal by the first communication module 1110 connected to the first antenna 1310 may not be performed at the same time zone together with the transmission and reception of a satellite communication signal by the satellite communication module 1100 connected to the first antenna 1310. For example, while the first antenna 1310 is being operated by the satellite communication module 1100, the first communication module 1110 may not transmit and/or receive a cellular communication signal by using the first antenna 1310. In addition, for example, while the first antenna 1310 is being operated by the first communication module 1110, the satellite communication module 1100 may not transmit and/or receive a satellite communication signal through the first antenna 1310.

In addition, the second power supply unit 1220 of an embodiment may supply the second power V2 to either the satellite communication module 1100 or the first communication module 1110. Accordingly, while the satellite communication module 1100 is receiving the second power V2 from the second power supply unit 1220, the power amplifier within the first communication module 1110 may not receive the second power V2 from the second power supply unit 1220.

The second communication module 1120 of an embodiment may be a communication module for cellular communication, and may be a communication module for transmitting and/or receiving a signal of a specified second frequency band among frequency bands for cellular communication supported by the electronic device 1000. For example, the specified second frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the second frequency band may include a frequency band of a signal that may be radiated through the second antenna 1320 rather than the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The second communication module 1120 of an embodiment may be electrically connected to the second antenna 1320 of the electronic device 1000 and may transmit and/or receive a signal for cellular communication through the second antenna 1320. The second antenna 1320 may have an electrical length for radiating a signal of a specified second frequency band of cellular communication.

The second communication module 1120 of an embodiment may include a communication circuit for transmitting and/or receiving a signal of a specified second frequency band among frequency bands of cellular communication supported by the electronic device 1000. For example, the second communication module 1120 may include a power amplifier for amplifying the power of a signal for communication of a second frequency band. The power amplifier within the second communication module 1120 may receive third power V3 from the third power supply unit 1230 to be described later.

The first power supply unit 1210 of an embodiment may supply the first power V1 to the satellite communication module 1100. The first power supply unit 1210 may include a power management integrated circuit (PMIC) for supplying power to a power amplifier (PA) within a communication circuit for signal transmission. The first power supply unit 1210 may be a PMIC designed to provide Tx power for cellular communication, and may be, for example, a PMIC for outputting Tx power at a 24 dBm level.

In FIG. 4, it is illustrated that the first power supply unit 1210 supplies the first power V1 only to the satellite communication module 1100, but is not limited thereto. For example, the first power supply unit 1210 may also supply first power V1 to another communication module (not shown) for cellular communication.

The second power supply unit 1220 of an embodiment may supply the second power V2 to either the satellite communication module 1100 or the first communication module 1110. The second power supply unit 1220 may selectively supply the second power V2 to either the satellite communication module 1100 or the first communication module 1110. The second power supply unit 1220 may include a power management integrated circuit (PMIC) for supplying power to a power amplifier (PA) within a communication circuit for signal transmission. The second power supply unit 1220 may be a PMIC designed to provide Tx power for cellular communication, and may be, for example, a PMIC for outputting Tx power at a 24 dBm level.

The satellite communication module 1100 of an embodiment may receive the first power V1 from the first power supply unit 1210 and the second power V2 from the second power supply unit 1220, thereby securing Tx power for satellite communication. For example, an equivalent isotropic radiated power (EIRP) of at least 29 dBm or more is required to use an Iridium communication system, and the first power V1 and the second power V2 from the first power supply unit 1210 and the second power supply unit 1220 for a Tx power of a 24 dBm level are provided to the satellite communication module 1100, whereby the satellite communication module 1100 may provide an output of a signal having a Tx power equal to or higher than the required level.

According to an embodiment, the first communication module 1110 that receives the second power V2 from the second power supply unit 1220 may include, for example, a communication module including an Eutra NR dual connectivity (ENDC) power amplifier (PA) module for cellular communication, a communication module including an ultra-high band (UHB) PA module, and a communication module including a low-band (LB) PA module, but is not limited thereto.

In FIG. 4, it is illustrated that the second power supply unit 1220 supplies the second power V2 only to the satellite communication module 1100 or the first communication module 1110, but is not limited thereto. For example, the second power supply unit 1220 may also supply second power V2 to another communication module (not shown) for cellular communication.

The third power supply unit 1230 of an embodiment may supply the third power V3 to the second communication module 1120. The third power supply unit 1230 may not be connected to the satellite communication module 1100 and the first communication module 1110, and may not supply third power V3 to the satellite communication module 1100 and the first communication module 1110. For example, the third power supply unit 1230 may include a power management integrated circuit (PMIC) for supplying power to a power amplifier (PA) within a communication circuit for signal transmission.

Alternatively, for example, the third power supply unit 1230 may be a PMIC for providing a general level of power to electronic components other than an electronic component for signal transmission within a communication circuit. In this case, the second communication module 1120 that receives the third power V3 from the third power supply unit 1230 may be an RX module for signal reception. For example, the RX module for receiving a signal from a cellular communication network may include at least one of an LNA/PA module in duplexer (LPAMID) for Tx and PRX, an LNA front end module (LFEM) for DRX, or a multi input multi output (MIMO) module for RX performance enhancement.

The first antenna 1310 of an embodiment may be electrically connected to the satellite communication module 1100 and the first communication module 1110. When the first antenna 1310 is electrically connected to the satellite communication module 1100, the first antenna 1310 may operate as an antenna for satellite communication. Alternatively, when the first antenna 1310 is electrically connected to the first communication module 1110, the first antenna 1310 may operate as an antenna for cellular communication of a specified first frequency band. For example, the first antenna 1310 may be connected to the satellite communication module 1100 and the first communication module 1110 through a switch (not shown), and may be selectively connected to the satellite communication module 1100 or the first communication module 1110 by a switching operation of the switch (not shown).

The second antenna 1320 of an embodiment may be electrically connected to the second communication module 1120. The second antenna 1320 may be electrically connected to the second communication module 1120, and may function as an antenna for cellular communication of a specified second frequency band.

For example, the first antenna 1310 may include at least one of a Sub 2 antenna connected to a TX module and/or a primary RX (PRX) module for satellite communication, or a Sub 1 antenna connected to a diversity RX (DRX) module for satellite communication. For example, the second antenna 1320 may include at least one of the remaining antennas other than the Sub 2 antenna and the Sub 1 antenna.

The electronic device 1000 of an embodiment may perform satellite communication by using the satellite communication module 1100 in a satellite communication mode for performing satellite communication. In this case, the first antenna 1310, the first power supply unit 1210, and the second power supply unit 1220 may operate for the satellite communication module 1100, and thus, the first communication module 1110 may not operate. However, the second communication module 1120 may search for a signal of a second frequency band of cellular communication by using the second antenna 1320 and the third power supply unit 1230, since the second communication module 1120 does not require the first antenna 1310, the first power supply unit 1210, and the second power supply unit 1220 that are used for satellite communication.

Accordingly, even while being performing satellite communication via the satellite communication module 1100, the electronic device 1000 may perform a search operation for a signal for cellular communication, and as the electronic device 1000 enters the coverage 30 of the cellular communication out of the coverage 30, the electronic device 1000 may search for a signal for cellular communication. As the signal for cellular communication is searched, the electronic device 1000 may end the operation of the satellite communication module 1100, and may transmit and receive a signal via the cellular communication by using at least one of the first communication module 1110 and the second communication module 1120.

According to an embodiment, the electronic device 1000 may search for a signal of a cellular communication network through a communication module for cellular communication (e.g., Rx MIMO module for cellular communication) by using an antenna that is used for cellular communication but is not used as an antenna for satellite communication. Accordingly, while being transmitting and receiving a rescue signal (e.g., SOS signal) via the satellite communication, the electronic device 1000 of a person in distress may search for a cellular communication in a rescue situation, and may transmit a rescue signal at a higher transfer speed via the searched cellular communication network.

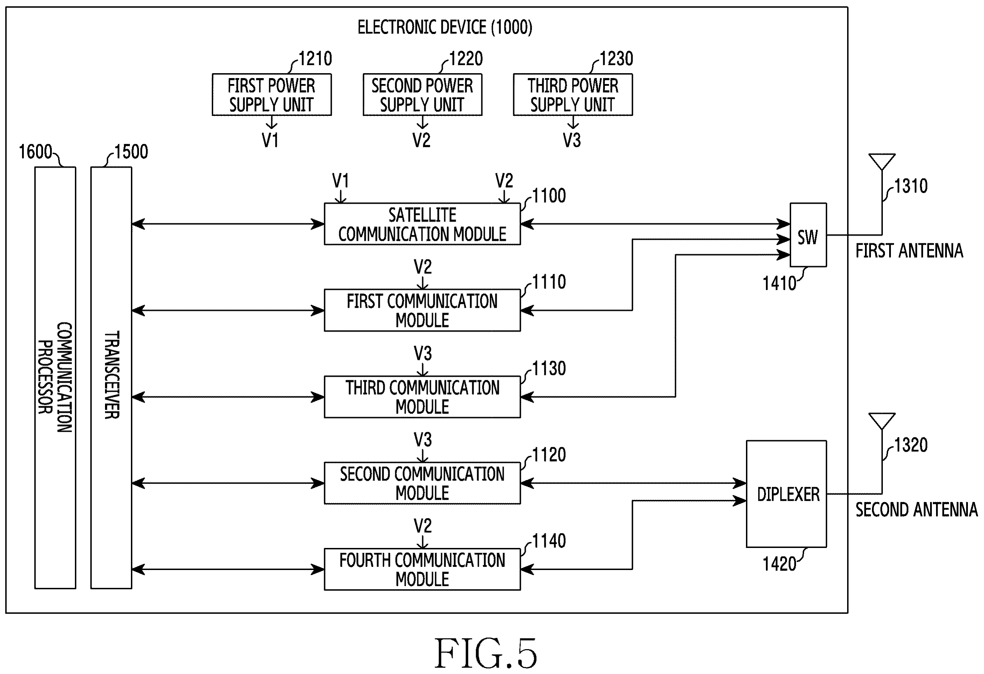

FIG. 5 is a block diagram of an electronic device according to an embodiment of the disclosure.

An electronic device 1000 of FIG. 5 may correspond to the electronic device 101 of FIGS. 1 and 2, and may include at least some of the components included in the electronic device 101 illustrated in FIGS. 1 and 2. Compared to the electronic device 1000 of FIG. 4, the electronic device 1000 of FIG. 5 may further include a third communication module 1130 and a fourth communication module 1140, but is not limited thereto.

Referring to FIG. 5, the electronic device 1000 of an embodiment of the disclosure may include a satellite communication module 1100, a first communication module 1110, a second communication module 1120, a third communication module 1130, a fourth communication module 1140, a first power supply unit 1210, a second power supply unit 1220, a third power supply unit 1230, a first antenna 1310, a second antenna 1320, a switch 1410, a diplexer 1420, a transceiver 1500, and a communication processor 1600.

The satellite communication module 1100 of an embodiment may be a communication module for satellite communication. The satellite communication module 1100 may include a communication circuit for transmitting and/or receiving a signal of a satellite communication band supported by the electronic device 1000. For example, the satellite communication band supported by the electronic device 1000 may include at least some of the Ka band, Ku band, C band, L band, and S band, but is not limited thereto.

The satellite communication module 1100 of an embodiment may be connected to the first antenna 1310 of the electronic device 1000, and may transmit and/or receive a signal for satellite communication through the first antenna 1310. The first antenna 1310 may have an electrical length for radiating a signal of a satellite communication band.

The satellite communication module 1100 of an embodiment may include a power amplifier for amplifying the power of a signal for satellite communication. The power amplifier within the satellite communication module 1100 may receive first power V1 from the first power supply unit 1210 to be described later and second power V2 from the second power supply unit 1220. Since a high-power signal must be radiated from the satellite communication module 1100 through the first antenna 1310 for the purpose of satellite communication, the satellite communication module 1100 may receive a plurality of power (e.g., first power V1 and second power V2) from a plurality of power supply units (e.g., first power supply unit 1210 and second power supply unit 1220).

The first communication module 1110 of an embodiment may be a communication module for cellular communication, and may be a communication module for transmitting and/or receiving a signal of a specified first frequency band among frequency bands for cellular communication supported by the electronic device 1000. For example, the specified first frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the first frequency band may include a frequency band of a signal that may be radiated through the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The first communication module 1110 of an embodiment may be electrically connected to the first antenna 1310 of the electronic device 1000, and may transmit and/or receive a signal for cellular communication through the first antenna 1310. The first antenna 1310 may have an electrical length for radiating a signal of a specified first frequency band of cellular communication.

The first communication module 1110 of an embodiment may include a communication circuit for transmitting and/or receiving a signal of a specified first frequency band among frequency bands of cellular communication supported by the electronic device 1000. For example, the first communication module 1110 may include a power amplifier for amplifying the power of a signal for communication of a first frequency band. The power amplifier within the first communication module 1110 may receive second power V2 from the second power supply unit 1220.

The first communication module 1110 and the satellite communication module 1100 of an embodiment and the third communication module 1130 to be described later may be electrically connected to the first antenna 1310, and the first communication module 1110 may share the first antenna 1310 with the satellite communication module 1100 and the third communication module 1130. The first communication module 1110 of an embodiment may transmit and/or receive a cellular communication signal by using the first antenna 1310 that may be used by the satellite communication module 1100. However, the use of the first antenna 1310 by the first communication module 1110 of an embodiment may not overlap with the use of the first antenna 1310 by the satellite communication module 1100. The transmission and reception of a cellular communication signal by the first communication module 1110 connected to the first antenna 1310 may not be performed at the same time zone together with the transmission and reception of a satellite communication signal by the satellite communication module 1100 connected to the first antenna 1310. For example, while the first antenna 1310 is being operated by the satellite communication module 1100, the first communication module 1110 may not transmit and/or receive a cellular communication signal by using the first antenna 1310. In addition, for example, while the first antenna 1310 is being operated by the first communication module 1110, the satellite communication module 1100 may not transmit and/or receive a satellite communication signal through the first antenna 1310.

In addition, the second power supply unit 1220 of an embodiment may supply second power V2 to one of the satellite communication module 1100, the first communication module 1110, or the fourth communication module 1140. Accordingly, while the satellite communication module 1100 is receiving second power V2 from the second power supply unit 1220, the power amplifier within the first communication module 1110 may not receive second power V2 from the second power supply unit 1220.

The second communication module 1120 of an embodiment may be a communication module for cellular communication, and may be a communication module for transmitting and/or receiving a signal of a specified second frequency band among frequency bands for cellular communication supported by the electronic device 1000. For example, the specified second frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the second frequency band may include a frequency band of a signal that may be radiated through the second antenna 1320 rather than the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The second communication module 1120 of an embodiment may be electrically connected to the second antenna 1320 of the electronic device 1000 and may transmit and/or receive a signal for cellular communication through the second antenna 1320. The second antenna 1320 may have an electrical length for radiating a signal of a specified second frequency band of cellular communication.

The second communication module 1120 of an embodiment may include a communication circuit for transmitting and/or receiving a signal of a specified second frequency band among frequency bands of cellular communication supported by the electronic device 1000. For example, the second communication module 1120 may include a power amplifier for amplifying the power of a signal for communication of a second frequency band. The power amplifier within the second communication module 1120 may receive third power V3 from the third power supply unit 1230.

The third communication module 1130 of an embodiment may be a communication module for cellular communication, and may be a communication module for transmitting and/or receiving a signal of a specified third frequency band among frequency bands for cellular communication supported by the electronic device 1000. For example, the specified third frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the second frequency band may include a frequency band of a signal that may be radiated through the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The third communication module 1130 of an embodiment may be electrically connected to the first antenna 1310 of the electronic device 1000, and may transmit and/or receive a signal for cellular communication through the first antenna 1310. The first antenna 1310 may have an electrical length for radiating a signal of a specified third frequency band of cellular communication.

The third communication module 1130 of an embodiment may include a communication circuit for transmitting and/or receiving a signal of a specified third frequency band among frequency bands of cellular communication supported by the electronic device 1000. For example, the third communication module 1130 may include a power amplifier for amplifying the power of a signal for communication of a third frequency band. The power amplifier within the third communication module 1130 may receive third power V3 from the third power supply unit 1230.

The first communication module 1110, the satellite communication module 1100, and the third communication module 1130 of an embodiment may each be electrically connected to the first antenna 1310, and the third communication module 1130 may share the first antenna 1310 with the satellite communication module 1100 and the first communication module 1110. The third communication module 1130 of an embodiment may transmit and/or receive a cellular communication signal by using the first antenna 1310 that may be used by the satellite communication module 1100. However, the use of the first antenna 1310 by the third communication module 1130 of an embodiment may not overlap with the use of the first antenna by the satellite communication module 1100. The transmission and reception of a cellular communication signal by the third communication module 1130 connected to the first antenna 1310 may not be performed at the same time zone together with the transmission and reception of a satellite communication signal by the satellite communication module 1100 connected to the first antenna 1310. For example, while the first antenna 1310 is being operated by the satellite communication module 1100, the third communication module 1130 may not transmit and/or receive a cellular communication signal by using the first antenna 1310. In addition, for example, while the first antenna 1310 is being operated by the third communication module 1130, the satellite communication module 1100 may not transmit and/or receive a satellite communication signal through the first antenna 1310.

The use of the first antenna 1310 by the third communication module 1130 of an embodiment may not overlap with the use of the first antenna 1310 by the first communication module 1110. The transmission and reception of a cellular communication signal by the third communication module 1130 connected to the first antenna 1310 may not be performed at the same time zone together with the transmission and reception of a cellular communication signal by the first communication module 1110 connected to the first antenna 1310. For example, while the first antenna 1310 is being operated by the first communication module 1110, the third communication module 1130 may not transmit and/or receive a cellular communication signal by using the first antenna 1310. In addition, for example, while the first antenna 1310 is being operated by the third communication module 1130, the first communication module 1110 may not transmit and/or receive a satellite communication signal the first antenna 1310.

In addition, the third power supply unit 1230 of an embodiment may supply third power V3 to the second communication module 1120 and/or the third communication module 1130. For example, the third power supply unit 1230 may include a power management integrated circuit (PMIC) for supplying power to a power amplifier (PA) within a communication circuit for signal transmission. In this case, while the second communication module 1120 is receiving third power V3 from the third power supply unit 1230, the power amplifier within the third communication module 1130 may not receive third power V3 from the third power supply unit 1230. Alternatively, for example, the third power supply unit 1230 may be a PMIC for providing a general level of power to electronic components other than an electronic component for signal transmission within the communication circuit. In this case, the third communication module 1130 and the second communication module 1120 that receive the third power V3 from the third power supply unit 1230 may be RX modules for signal reception. In this case, while the second communication module 1120 is receiving the third power V3 from the third power supply unit 1230, the third communication module 1130 may receive the third power V3 from the third power supply unit 1230.

The fourth communication module 1140 of an embodiment may be a communication module for cellular communication, and may be a communication module for transmitting and/or receiving a signal of a specified fourth frequency band among frequency bands for cellular communication supported by the electronic device 1000. For example, the specified fourth frequency band of cellular communication supported by the electronic device 1000 may include, but is not limited to, at least some of a frequency band of 700 MHz to 3 GHz used in a legacy network, a frequency band of a Sub6 band (e.g., about 6 GHz or less) used in a 5th generation (5G) network, and a frequency band of a 5G Above6 band (e.g., about 6 GHz to about 60 GHz) to be used in the 5G network. For example, the second frequency band may include a frequency band of a signal that may be radiated through the second antenna 1320 rather than the first antenna 1310, from among the frequency band of 700 MHz to 3 GHz used in the legacy network, the frequency band of the Sub6 band (e.g., about 6 GHz or less) used in the 5th generation (5G) network, and the frequency band of the 5G Above6 band (e.g., about 6 GHz to about 60 GHz) to be used in the 5G network.

The fourth communication module 1140 of an embodiment may be electrically connected to the second antenna 1320 of the electronic device 1000, and may transmit and/or receive a signal for cellular communication through the second antenna 1320. The second antenna 1320 may have an electrical length for radiating a signal of a specified fourth frequency band of cellular communication.

The fourth communication module 1140 of an embodiment may include a communication circuit for transmitting and/or receiving a signal of a specified fourth frequency band among frequency bands of cellular communication supported by the electronic device 1000. For example, the fourth communication module 1140 may include a power amplifier for amplifying the power of a signal for communication of a fourth frequency band. The power amplifier within the fourth communication module 1140 may receive second power V2 from the second power supply unit 1220.

The first power supply unit 1210 of an embodiment may supply first power V1 to the satellite communication module 1100. The first power supply unit 1210 may include a power management integrated circuit (PMIC) for supplying power to a power amplifier (PA) within a communication circuit for signal transmission. The first power supply unit 1210 may be a PMIC designed to provide Tx power for cellular communication, and may be, for example, a PMIC that guarantees an output of Tx power at a 24 dBm level.

In FIG. 5, it is illustrated that the first power supply unit 1210 supplies the first power V1 only to the satellite communication module 1100, but is not limited thereto. For example, the first power supply unit 1210 may also supply first power V1 to another communication module for cellular communication.fi

The second power supply unit 1220 of an embodiment may supply second power V2 to the satellite communication module 1100, the first communication module 1110, or the fourth communication module 1140. The second power supply unit 1220 may selectively supply second power V2 to one of the satellite communication module 1100, the first communication module 1110, or the fourth communication module 1140. The second power supply unit 1220 may include a power management integrated circuit (PMIC) for supplying power to a power amplifier (PA) within a communication circuit for signal transmission. The second power supply unit 1220 may be a PMIC designed to provide Tx power for cellular communication, and may be, for example, a PMIC that guarantees an output of Tx power at a 24 dBm level.

The satellite communication module 1100 of an embodiment may receive first power V1 from the first power supply unit 1210 and second power V2 from the second power supply unit 1220, thereby securing Tx power for satellite communication. For example, an equivalent isotropic radiated power (EIRP) of at least 29 dBm or more is required to use an Iridium communication system, and the first power V1 and the second power V2 from the first power supply unit 1210 and the second power supply unit 1220 for a Tx power of a 24 dBm level are provided to the satellite communication module 1100, whereby the satellite communication module 1100 may provide an output of a signal having a Tx power equal to or higher than the required level.

In FIG. 5, it is illustrated that the second power supply unit 1220 supplies the second power V2 to the satellite communication module 1100, the first communication module 1110, or the fourth communication module 1140, but is not limited thereto. For example, the second power supply unit 1220 may also supply second power V2 to another communication module for cellular communication.

The third power supply unit 1230 of an embodiment may supply third power V3 to the second communication module 1120 and/or the third communication module 1130. The third power supply unit 1230 is not connected to the satellite communication module 1100, the first communication module 1110, and the fourth communication module 1140, and may not supply third power V3 to the satellite communication module 1100, the first communication module 1110, and the fourth communication module 1140. For example, the third power supply unit 1230 may include a power management integrated circuit (PMIC) for supplying power to a power amplifier (PA) within a communication circuit for signal transmission.

Alternatively, for example, the third power supply unit 1230 may be a PMIC for providing a general level of power to electronic components other than an electronic component for signal transmission within a communication circuit. In this case, the second communication module 1120 and the third communication module 1130 that receive third power V3 from the third power supply unit 1230 may be RX modules for signal reception.

The first antenna 1310 of an embodiment may be electrically connected to the satellite communication module 1100, the first communication module 1110, and the third communication module 1130. When the first antenna 1310 is electrically connected to the satellite communication module 1100, the first antenna 1310 may operate as an antenna for satellite communication. Alternatively, when the first antenna 1310 is electrically connected to the first communication module 1110, the first antenna 1310 may operate as an antenna for cellular communication of a specified first frequency band. Alternatively, when the first antenna 1310 is electrically connected to the third communication module 1130, the first antenna 1310 may operate as an antenna for cellular communication of a specified third frequency band.

According to an embodiment, the first antenna 1310 may be connected to the satellite communication module 1100, the first communication module 1110, and the third communication module 1130 through the switch 1410. For example, the first antenna 1310 may be selectively connected to the satellite communication module 1100, the first communication module 1110, or the third communication module 1130 by a switching operation of the switch 1410.

The second antenna 1320 of an embodiment may be electrically connected to the second communication module 1120 and the fourth communication module 1140. For example, the second antenna 1320 may be electrically connected to the second communication module 1120 and the fourth communication module 1140 through the diplexer 1420. In this case, since the diplexer 1420 is a passive element that divides signals, the transmission and reception of a signal through the second communication module 1120 may be performed in parallel with the transmission and reception of a signal through the fourth communication module 1140.

The transceiver 1500 of an embodiment may receive signals from the satellite communication module 1100, the first communication module 1110, the second communication module 1120, the third communication module 1130, and the fourth communication module 1140, and provide signals to the satellite communication module 1100, the first communication module 1110, the second communication module 1120, the third communication module 1130, and the fourth communication module 1140.

The communication processor 1600 of an embodiment may control the satellite communication module 1100, the first communication module 1110, the second communication module 1120, the third communication module 1130, the fourth communication module 1140, and the transceiver 1500. The communication processor 1600 may establish a communication channel for transmitting and receiving a signal in a specified frequency band through at least one of the first communication module 1110, the second communication module 1120, the third communication module 1130, and the fourth communication module 1140, and may support network communication through the established communication channel.

The communication processor 1600 of an embodiment may perform satellite communication by using the satellite communication module 1100, in a satellite communication mode for performing satellite communication. In this case, the first antenna 1310, the first power supply unit 1210, and the second power supply unit 1220 may operate for the satellite communication module 1100, and thus, the first communication module 1110 and the third communication module 1130 may not operate. However, since the second communication module 1120 and/or the fourth communication module 1140 do not require the first antenna 1310, the first power supply unit 1210, and the second power supply unit 1220 that are used for satellite communication, the second communication module 1120 and/or the fourth communication module 1140 may search for a signal for cellular communication by using the second antenna 1320 and the third power supply unit 1230.

Accordingly, even while being performing satellite communication through the satellite communication module 1100, the communication processor 1600 may perform a search operation for a signal for cellular communication, and as the electronic device 1000 enters the coverage 30 of the cellular communication out of the coverage 30, the communication processor 1600 may search for a signal for cellular communication. As the signal for cellular communication is searched, the communication processor 1600 may end the operation of the satellite communication module 1100, and may perform the transmission and reception of a signal via the cellular communication, by using at least one of the first communication module 1110, the second communication module 1120, the third communication module 1130, and the fourth communication module 1140.

In FIG. 5, the first communication module 1110, the second communication module 1120, the third communication module 1130, and the fourth communication module 1140 are described as examples of communication modules for cellular communication, but are not limited thereto. The electronic device 1000 may further include other communication modules in addition to the first communication module 1110, the second communication module 1120, the third communication module 1130, and the fourth communication module 1140.

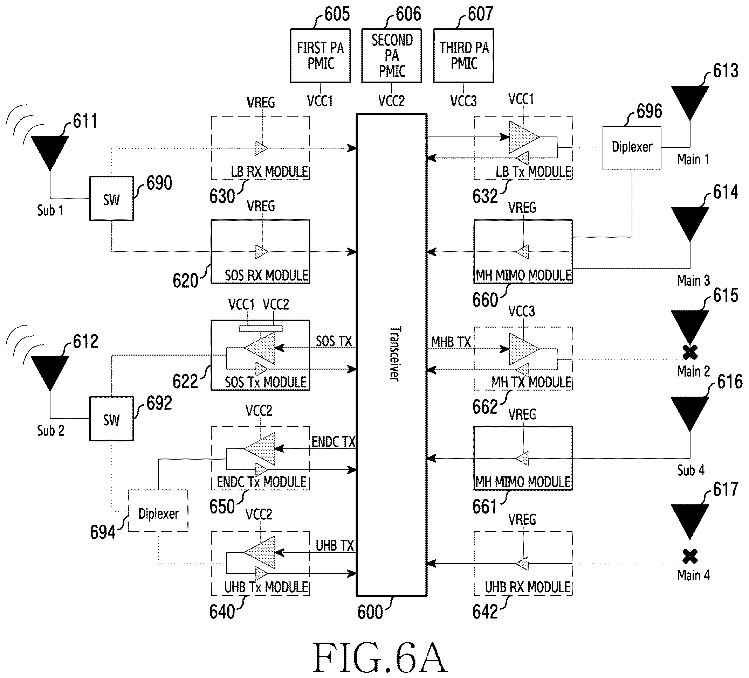

FIG. 6A is a diagram illustrating an example of an electronic device including various communication modules and various antennas for searching for a signal of cellular communication during satellite communication, according to an embodiment of the disclosure.

Referring to FIG. 6A, an electronic device 1000 of an embodiment may include, for example, a transceiver 600, a first power amplifier power management integrated circuit (PA PMIC) 605, a second PA PMIC 606, a third PA PMIC 607, a Sub 1 antenna 611, a Sub 2 antenna 612, a Main 1 antenna 613, a Main 3 antenna 614, a Main 2 antenna 615, a Sub 4 antenna 616, a Main 4 antenna 617, an SOS RX module 620, an SOS TX module 622, a low band (LB) RX module 630, an LB TX module 632, an ultra-high band (UHB) TX module 640, an UHB RX module 642, an Eutra NR dual connectivity (ENDC) TX module 650, mid-high band (MH) multi-input multi-output (MIMO) modules 660 and 661, an MH TX module 662, a switch 690, a switch 692, a diplexer 694, and a diplexer 696. For example, a TX module and a Primary RX (PRX) module for satellite communication may use the Sub 2 antenna 612, and a diversity RX (DRX) module for satellite communication may use the Sub 1 antenna 611.

According to an embodiment, the SOS RX module 620 may be connected to the Sub 1 antenna 611 through the switch 690. The SOS RX module 620 may receive general power VREG from a PMIC (not shown) for providing a general level of power to electronic components other than an electronic component for signal transmission within a communication circuit.

The SOS TX module 622 of an embodiment may be connected to the Sub 2 antenna 612 through the switch 692. The SOS TX module 622 may be connected to the first PA PMIC 605 and the second PA PMIC 606, and receive first power VCC1 from the first PA PMIC 605 and second power VCC2 from the second PA PMIC 606, together.

When the electronic device 1000 of an embodiment transmits and receives a signal via satellite communication, the switch 690 may connect the Sub 1 antenna 611 to the SOS RX module 620, and the switch 692 may connect the Sub 2 antenna 612 to the SOS TX module 622. In addition, the first PA PMIC 605 may supply first power VCC1 to the SOS TX module 622, and the second PA PMIC 606 may supply second power VCC2 to the SOS TX module 622.

The LB RX module 630 of an embodiment may be connected to the Sub 1 antenna 611 through the switch 690. The LB RX module 630 may receive general power VREG from a PMIC (not shown) for providing a general level of power to electronic components other than an electronic component for signal transmission within a communication circuit. When the electronic device 1000 of an embodiment transmits and receives a signal via satellite communication, the connection between the LB RX module 630 and the Sub 1 antenna 611 is disconnected by the switch 690, and thus, the LB RX module 630 does not operate for satellite signal reception. For example, the LB RX module 630 may receive general power VREG during satellite communication, but since the connection between the LB RX module 630 and the Sub 1 antenna 611 is disconnected, the LB RX module 630 does not operate for satellite signal reception. In this case, the LB RX module 630 may correspond to the third communication module 1130.

The LB TX module 632 of an embodiment may be connected to the Main 1 antenna 613 through the diplexer 696. The LB TX module 632 of an embodiment may be connected to the first PA PMIC 605 and receive first power VCC1 from the first PA PMIC 605. When the electronic device 1000 of an embodiment transmits and receives a signal via satellite communication, first power VCC1 is supplied from the first PA PMIC 605 to the SOS TX module 622, and the first power VCC1 from the first PA PMIC 605 is not supplied to the LB TX module 632. Accordingly, the LB TX module 632 does not operate for satellite signal transmission. For example, since the LB TX module 632 may use the Main 1 antenna 613 even during satellite communication but may not receive the first power VCC1 from the first PA PMIC 605, the LB TX module 632 does not operate for satellite signal transmission. In this case, the LB TX module 632 may correspond to the fourth communication module 1140.

The UHB TX module 640 of an embodiment may be connected to the Sub 2 antenna 612 through the diplexer 694 and the switch 692. The UHB TX module 640 of an embodiment may be connected to the second PA PMIC 606 and may receive second power VCC2 from the second PA PMIC 606. When the electronic device 1000 of an embodiment transmits and receives a signal via satellite communication, second power VCC2 from the second PA PMIC 606 is supplied to the SOS TX module 622, and the second power VCC2 from the second PA PMIC 606 is not supplied to the UHB TX module 640. In addition, when the electronic device 1000 transmits and receives a signal through satellite communication, the connection between the UHB TX module 640 and the Sub 2 antenna 612 is disconnected by the switch 692, and thus, the UHB TX module 640 does not operate for satellite signal transmission. For example, since the UHB TX module 640 may not use the Sub 2 antenna 612 even during satellite communication and may not receive the second power VCC2 from the second PA PMIC 606, the UHB TX module 640 does not operate for satellite signal transmission. In this case, the UHB TX module 640 may correspond to the first communication module 1110.

The UHB RX module 642 of an embodiment may be connected to the Main 4 antenna 617. The UHB RX module 642 of an embodiment may receive general power VREG from a PMIC (not shown) for providing a general level of power to electronic components other than an electronic component for signal transmission within a communication circuit. When the electronic device 1000 of an embodiment transmits and receives a signal via satellite communication, the UHB RX module 642 may be connected to the Main 4 antenna 617 and receive the general power VREG, but since the UHB TX module 640 does not operate, the UHB RX module 642 does not operate for signal reception.

The ENDC TX module 650 of an embodiment may be connected to the Sub 2 antenna 612 through the diplexer 694 and the switch 692. The ENDC TX module 650 of an embodiment may be connected to the second PA PMIC 606 and receive second power VCC2 from the second PA PMIC 606. When the electronic device 1000 of an embodiment transmits and receives a signal via satellite communication, second power VCC2 is supplied from the second PA PMIC 606 to the SOS TX module 622, and the second power VCC2 from the second PA PMIC 606 is not supplied to the ENDC TX module 650. In addition, when the electronic device 1000 transmits and receives a signal via satellite communication, the connection between the ENDC TX module 650 and the Sub 2 antenna 612 is disconnected by the switch 692, and thus, the ENDC TX module 650 does not operate for satellite signal transmission. For example, since the ENDC TX module 650 may not use the Sub 2 antenna 612 even during satellite communication and may not receive the second power VCC2 from the second PA PMIC 606, the ENDC TX module 650 does not operate for signal transmission. In this case, the ENDC TX module 650 may correspond to the first communication module 1110.

The MH TX module 662 of an embodiment may be connected to the Main 2 antenna 615. The MH TX module 662 of an embodiment may be connected to the third PA PMIC 607 and receive third power VCC3 from the third PA PMIC 607. When the electronic device 1000 of an embodiment transmits and receives a signal via satellite communication, the MH TX module 662 may be connected to the Main 2 antenna 615 and receive the third power VCC3. However, since the ENDC TX module 650 must be used for diversity RX (DRX) of the MH TX module 662, and the MH TX module 662 does not operate during satellite communication, the MH TX module 662 also does not operate during satellite communication.

The MH MIMO modules 660 and 661 of an embodiment may be connected to the Main 1 antenna 613, the Main 3 antenna 614, and the Sub 4 antenna 616. The MH MIMO module 660, 661 may be connected to the Main 1 antenna 613 through the diplexer 696. The MH MIMO modules 660 and 661 of an embodiment may receive general power VREG from a PMIC (not shown) for providing a general level of power to electronic components other than electronic components for signal transmission within communication circuits. In FIG. 6A, the MH MIMO module 660 connected to the Main 1 antenna 613 and the Main 3 antenna 614 and the MH MIMO module 661 connected to the Sub 4 antenna 616 are illustrated as separate modules, but are not limited thereto, and the MH MIMO module 660 connected to the Main 1 antenna 613 and the Main 3 antenna 614 and the MH MIMO module 661 connected to the Sub 4 antenna 616 may be one and the same module. When the electronic device 1000 of an embodiment transmits and receives a signal via satellite communication, the Main 1 antenna 613, the Main 3 antenna 614, and the Sub 4 antenna 616 may not be used by the SOS TX module 622 and the SOS RX module 620, and may receive the general power VREG, so the MH MIMO modules 660 and 661 may operate to search for a signal of cellular communication.

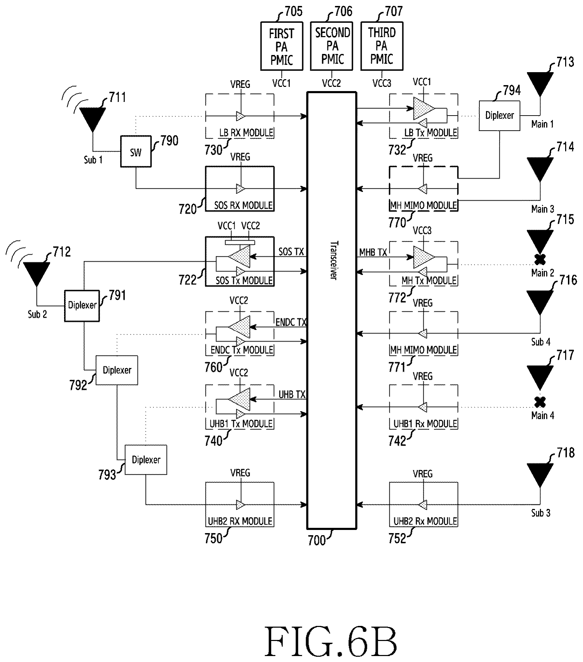

FIG. 6B is a diagram illustrating an example of an electronic device including various communication modules and various antennas for searching for a signal of cellular communication during satellite communication, according to an embodiment of the disclosure.

Referring to FIG. 6B, an electronic device 1000 of an embodiment may include, for example, a transceiver 700, a first PA PMIC 705, a second PA PMIC 706, a third PA PMIC 707, a Sub 1 antenna 711, a Sub 2 antenna 712, a Main 1 antenna 713, a Main 3 antenna 714, a Main 2 antenna 715, a Sub 4 antenna 716, a Main 4 antenna 717, a Sub 3 antenna 718, an SOS RX module 720, an SOS TX module 722, an LB RX module 730, an LB TX module 732, an UHB1 TX module 740, an UHB1 RX module 742, UHB2 RX modules 750 and 752, an ENDC TX module 760, MH MIMO modules 770 and 771, an MH TX module 772, a switch 790, a diplexer 791, a diplexer 792, a diplexer 793, and a diplexer 794. For example, a TX module and a Primary RX (PRX) module for satellite communication may use the Sub 2 antenna 712, and a diversity RX (DRX) module for satellite communication may use the Sub 1 antenna 711.

According to an embodiment, the SOS RX module 720 may be connected to the Sub 1 antenna 711 through the switch 790. The SOS RX module 720 may receive general power VREG from a PMIC (not shown) for providing a general level of power to electronic components other than an electronic component for signal transmission within a communication circuit.

The SOS TX module 722 of an embodiment may be connected to the Sub 2 antenna 712 through the diplexer 791. The SOS TX module 722 may be connected to the first PA PMIC 705 and the second PA PMIC 706, and receive first power VCC1 from the first PA PMIC 705 and second power VCC2 from the second PA PMIC 706, together.

When the electronic device 1000 of an embodiment transmits and receives a signal via satellite communication, the switch 790 may connect the Sub 1 antenna 711 to the SOS RX module 720, and the Sub 2 antenna 712 may be connected to the SOS TX module 722 through the diplexer 791. In addition, the first PA PMIC 705 may supply first power VCC1 to the SOS TX module 722, and the second PA PMIC 706 may supply second power VCC2 to the SOS TX module 722.

The LB RX module 730 of an embodiment may be connected to the Sub 1 antenna 711 through the switch 790. The LB RX module 730 may receive general power VREG from a PMIC (not shown) for providing a general level of power to electronic components other than an electronic component for signal transmission within a communication circuit. When the electronic device 1000 of an embodiment transmits and receives a signal via satellite communication, the connection between the LB RX module 730 and the Sub 1 antenna 711 is disconnected by the switch 790, and thus, the LB RX module 730 does not operate for signal reception. For example, since the LB RX module 730 may receive the general power VREG during satellite communication but the connection between the LB RX module 730 and the Sub 1 antenna 711 is disconnected, the LB RX module 730 does not operate for signal reception.

The LB TX module 732 of an embodiment may be connected to the Main 1 antenna 713 through the diplexer 794. The LB TX module 732 of an embodiment may be connected to the first PA PMIC 705 and receive first power VCC1 from the first PA PMIC 705. When the electronic device 1000 of an embodiment transmits and receives a signal via satellite communication, first power VCC1 is supplied from the first PA PMIC 705 to the SOS TX module 722, and the first power VCC1 from the first PA PMIC 705 is not supplied to the LB TX module 732. Accordingly, the LB TX module 732 does not operate for satellite signal transmission. For example, since the LB TX module 732 may use the Main 1 antenna 713 even during satellite communication but may not receive the first power VCC1 from the first PA PMIC 705, the LB TX module 732 does not operate for satellite signal transmission.

The UHB1 TX module 740 of an embodiment may be connected to the Sub2 antenna 712 through the diplexer 793, the diplexer 792, and the diplexer 791. The UHB1 TX module 740 of an embodiment may be connected to the second PA PMIC 706 and receive second power VCC2 from the second PA PMIC 706. When the electronic device 1000 of an embodiment transmits and receives a signal via satellite communication, the UHB1 TX module 740 may use the Sub 2 antenna 712 through the diplexer 791, the diplexer 792, and the diplexer 793. However, when the electronic device 1000 transmits and receives a signal via satellite communication, second power VCC2 is supplied from the second PA PMIC 706 to the SOS TX module 722, and the second power VCC2 from the second PA PMIC 706 is not supplied to the UHB1 TX module 740. Accordingly, the UHB1 TX module 740 does not operate for signal transmission.

The UHB1 RX module 742 of an embodiment may be connected to the Main 4 antenna 717. The UHB1 RX module 742 of an embodiment may receive general power VREG from a PMIC (not shown) for providing a general level of power to electronic components other than an electronic component for signal transmission within a communication circuit. When the electronic device 1000 of an embodiment transmits and receives a signal via satellite communication, the UHB1 RX module 742 may be connected to the Main 4 antenna 717 and receive the general power VREG but since the UHB1 TX module 740 does not operate, the UHB1 RX module 742 does not operate for satellite signal reception.

The UHB2 RX modules 750 and 752 of an embodiment may be connected to the Sub 2 antenna 712 and the Sub 3 antenna 718. The UHB2 RX module 750 may be connected to the Sub 2 antenna 712 through the diplexer 793, the diplexer 792, and the diplexer 791. In addition, the UHB2 RX module 752 may be connected to the Sub 3 antenna 718. The UHB2 RX modules 750 and 752 of an embodiment may receive general power VREG from a PMIC (not shown) for providing a general level of power to electronic components other than electronic components for signal transmission within communication circuits. In FIG. 6B, the UHB2 RX module 750 connected to the Sub 2 antenna 712 and the UHB2 RX module 752 connected to the Sub 3 antenna 718 are illustrated as separate modules, but are not limited thereto, and the UHB2 RX module 750 and the UHB2 Rx module 752 connected to the Sub 3 antenna 718 may be one and the same module. When the electronic device 1000 of an embodiment transmits and receives a signal via satellite communication, the UHB2 RX module 750 may use the Sub 2 antenna 712 through the diplexer 791, the diplexer 792, and the diplexer 793. In addition, when the electronic device 1000 transmits and receives a signal via satellite communication, the UHB2 RX module 750 may receive the general power VREG. Accordingly, the UHB2 RX module 750 may operate to search for a signal of cellular communication.

The ENDC TX module 760 of an embodiment may be connected to the Sub 2 antenna 712 through the diplexer 792 and the diplexer 791. The ENDC TX module 760 of an embodiment may be connected to the second PA PMIC 706 and receive second power VCC2 from the second PA PMIC 706. When the electronic device 1000 of an embodiment transmits and receives a signal via satellite communication, the ENDC TX module 760 may use the Sub 2 antenna 712 through the diplexer 791 and the diplexer 792. However, second power VCC2 is supplied from the second PA PMIC 706 to the SOS TX module 722, and the second power VCC2 from the second PAPMIC 706 is not supplied to the ENDC TX module 760. Accordingly, the ENDC TX module 760 does not operate for signal transmission.

The MH TX module 772 of an embodiment may be connected to the Main 2 antenna 715. The MH TX module 772 of an embodiment may be connected to the third PA PMIC 707 and receive third power VCC3 from the third PA PMIC 707. When the electronic device 1000 of an embodiment transmits and receives a signal via satellite communication, the MH TX module 772 may be connected to the Main 2 antenna 715 and receive the third power VCC3. However, since the ENDC TX module 760 must be used for diversity RX (DRX) of the MH TX module 772, and the ENDC TX module 760 does not operate during satellite communication, the MH TX module 772 also does not operate during satellite communication.

The MH MIMO modules 770 and 771 of an embodiment may be connected to the Main 1 antenna 713, the Main 3 antenna 714, and the Sub 4 antenna 716. The MH MIMO module 770 may be connected to the Main 1 antenna 713 through the diplexer 794. The MH MIMO modules 770 and 771 of an embodiment may receive general power VREG from a PMIC (not shown) for providing a general level of power to electronic components other than electronic components for signal transmission within communication circuits. In FIG. 6B, the MH MIMO module 770 connected to the Main 1 antenna 713 and the Main 3 antenna 714 and the MH MIMO module 771 connected to the Sub 4 antenna 716 are illustrated as separate modules, but are not limited thereto, and the MH MIMO module 770 connected to the Main 1 antenna 713 and the Main 3 antenna 714 and the MH MIMO module 771 connected to the Sub 4 antenna 771 may be one and the same module. When the electronic device 1000 of an embodiment transmits and receives a signal via satellite communication, the Main 1 antenna 713, the Main 3 antenna 714, and the Sub 4 antenna 716 may not be used by the SOS TX module 722 and the SOS RX module 720, and may receive the general power VREG, so the MH MIMO modules 770 and 771 may operate to search for a signal of cellular communication. The UHB2 RX modules 770 and 771 and the MH MIMO modules 770 and 771 may be used simultaneously to search for a signal of cellular communication.

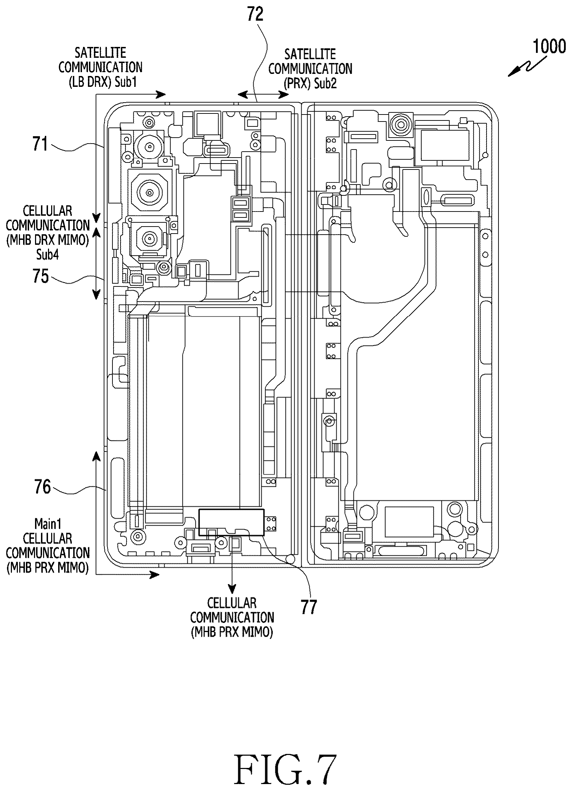

FIG. 7 is a cross-sectional view illustrating an example of a position where an antenna is arranged in an electronic device, according to an embodiment of the disclosure.

Referring to FIG. 7, at least a portion of a side portion of an electronic device 1000 includes conductive portions, and each of the conductive portions may operate as an antenna radiator for wireless communication. For example, the electronic device 1000 may include a Sub 1 antenna 71, a Sub 2 antenna 72, a Sub 4 antenna 75, and a Main 1 antenna 76 that are formed on the side portion of the electronic device 1000. In addition, for example, the electronic device 1000 may include a Main 3 antenna 77 positioned within the electronic device 1000.

According to an embodiment, the Sub 1 antenna 71 and the Sub 2 antenna 72 may be used for satellite communication. For example, the Sub 1 antenna 71 may be connected to a DRX module for satellite communication and be used for receiving a satellite communication signal, and the Sub 2 antenna 72 may be connected to a PRX module for satellite communication and be used for receiving a satellite communication signal.

According to an embodiment, the Sub 4 antenna 75, the Main 1 antenna 76, and the Main 3 antenna 77 may be used for cellular communication. For example, the Sub 4 antenna 75 may be connected to an MHB DRX MIMO module for cellular communication and be used for receiving a cellular communication signal, the Main 1 antenna 76 may be connected to an MB PRX MIMO module for cellular communication and be used for receiving a cellular communication signal, and the Main 3 antenna 77 may be connected to an HB PRX MIMO module for cellular communication and be used for receiving a cellular communication signal.

In FIG. 7, at least some of the antennas arranged in the electronic device 1000 are illustrated, and the types and positions of the antennas arranged in the electronic device 1000 are not limited thereto.

According to an embodiment, an electronic device may include a satellite communication module 1100 for satellite communication, a first communication module 1110 for first cellular communication, a second communication module 1120 for second cellular communication, a first power supply unit 1210 that supplies first power to the satellite communication module, a second power supply unit 1220 that supplies second power to one of the satellite communication module and the first communication module, a third power supply unit 1230 that supplies third power to the second communication module, a first antenna 1310 connected to the satellite communication module and the first communication module from among the satellite communication module, the first communication module, and the second communication module, a second antenna 1320 connected to the second communication module from among the satellite communication module, the first communication module, and the second communication module, and a communication processor 1600 connected to the satellite communication module, the first communication module, and the second communication module.

According to an embodiment, the communication processor may control the first power supply unit and the second power supply unit to supply the first power and the second power to the satellite communication module in order to transmit and/or receive a signal of the satellite communication through the first antenna.

According to an embodiment, while the first power and the second power are being supplied to the satellite communication module, the communication processor may search for a signal of the second cellular communication received through the second antenna by supplying the third power to the second communication module.

According to an embodiment, the first antenna may be shared by the satellite communication module and the first communication module, and be connected to the satellite communication module or the first communication module through a switch.

According to an embodiment, while the first power and the second power are being supplied to the satellite communication module, the first communication module may be disabled.

According to an embodiment, the electronic device may further include a third communication module 1130 that receives the third power from the third power supply unit and is connected to the first antenna, and while the first power and the second power are being supplied to the satellite communication module, the third communication module may be disabled.

According to an embodiment, the electronic device may further include a fourth communication module 1140 that receives the second power from the second power supply unit and is connected to the second antenna, and while the first power and the second power are being supplied to the satellite communication module, the fourth communication module may be disabled.

According to an embodiment, the second communication module may be a reception (RX) module for receiving a signal of the second cellular communication through the second antenna.

According to an embodiment, the first power supply unit and the second power supply unit may include a power management integrated circuit (PMIC) for supplying power to a power amplifier (PA) for signal transmission, and the third power supply unit may include a PMIC for supplying power for operations, other than the signal transmission, of other electronic components within the electronic device.

According to an embodiment, as an emergency call mode of the electronic device is executed, the communication processor may enable the satellite communication module and the second communication module and disable the first communication module.

According to an embodiment, when the signal of the second cellular communication received from the second antenna through the second communication module is searched, the communication processor may disable the satellite communication module and enable the first communication module.

According to an embodiment, the satellite communication module may include at least one of a transmission module for transmitting a signal for the satellite communication and a reception module for receiving a signal for the satellite communication.

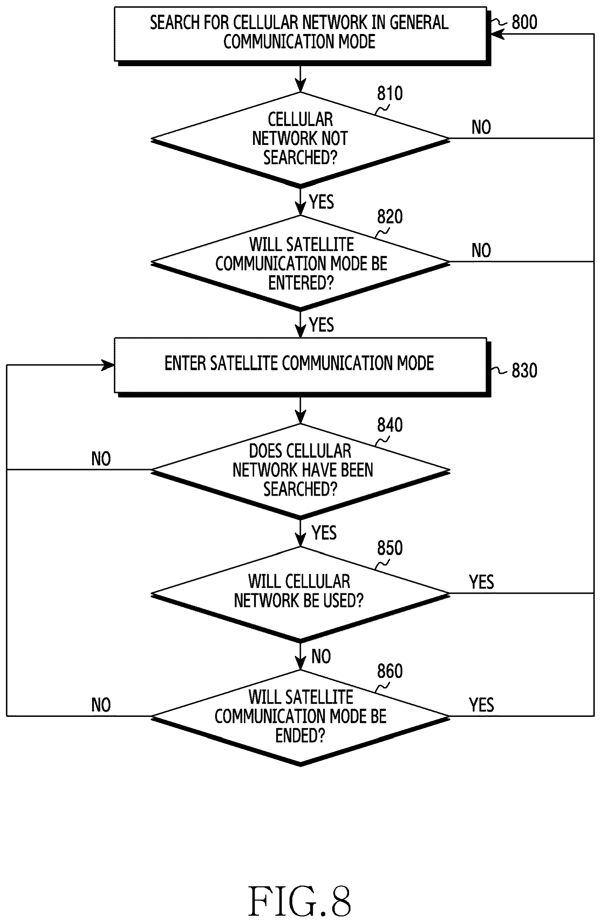

FIG. 8 is a flowchart of a method for searching for a signal of cellular communication during satellite communication in an electronic device, according to an embodiment of the disclosure.

In operation 800, a communication processor 1600 of an electronic device 1000 may search for a cellular network in a general communication mode. The general communication mode may be a communication mode for communicating with another electronic device by using the cellular network. According to an embodiment, the communication processor 1600 of the electronic device 1000 may search for the cellular network in order to perform communication via the cellular network in the general communication mode. For example, the communication processor 1600 of the electronic device 1000 may search for the cellular network by using at least one of a first communication module 1110, a second communication module 1120, a third communication module 1130, and a fourth communication module 1140 for the cellular network.

According to an embodiment, when an emergency call is required, the communication processor 1600 of the electronic device 1000 may execute an emergency call mode. As the emergency call mode is executed, the communication processor 1600 of the electronic device 1000 may first determine whether communication may be performed via the cellular network. To determine whether the communication may be performed via the cellular network, the communication processor 1600 of the electronic device 1000 may perform operation 800.

In operation 810, the communication processor 1600 of the electronic device 1000 may determine whether the cellular network has not been searched. When the cellular network is searched in operation 810, the communication processor 1600 of the electronic device 1000 may perform communication in the general communication mode and continue to search for a cellular network in the general communication mode.

When the cellular network is not searched in operation 810, the communication processor 1600 of the electronic device 1000 may determine whether to enter a satellite communication mode in operation 820. The satellite communication mode may be a communication mode for communicating with another electronic device by using a satellite communication network. According to an embodiment, when a separate user input for entering the satellite communication mode is not received, the communication processor 1600 of the electronic device 1000 may determine not to enter the satellite communication mode. According to an embodiment, when the emergency call mode is not executed, the separate user input for entering the satellite communication mode is not received, and the communication processor 1600 of the electronic device 1000 may determine not to enter the satellite communication mode. When the electronic device 1000 determines not to enter the satellite communication mode, the communication processor 1600 of the electronic device 1000 may perform operation 800.

According to an embodiment, when the separate user input for entering the satellite communication mode is received, the communication processor 1600 of the electronic device 1000 may determine to enter the satellite communication mode. According to an embodiment, when the cellular network is not searched in a state where the emergency call mode is executed, the communication processor 1600 of the electronic device 1000 may determine to enter the satellite communication mode. According to an embodiment, when it is determined to enter the satellite communication mode, the communication processor 1600 of the electronic device 1000 may enter the satellite communication mode in operation 830. According to an embodiment, the communication processor 1600 of the electronic device 1000 may search for a satellite communication network and display, on a screen of the electronic device 1000, a graphical user interface (GUI) for guiding the direction of the electronic device 1000 for the purpose of stable transmission and reception of a signal via the satellite communication network. The communication processor 1600 of the electronic device 1000 may enter the satellite communication mode, and transmit and receive a signal via the searched satellite communication network.

In operation 840, the communication processor 1600 of the electronic device 1000 may determine whether a cellular network has been searched in the satellite communication mode. According to an embodiment, the communication processor 1600 of the electronic device 1000 may perform communication by using the satellite communication module 1100 in the satellite communication mode. While performing the communication by using the satellite communication module 1100, the communication processor 1600 of the electronic device 1000 may search for a cellular network by using a communication module for cellular communication.

According to an embodiment, the communication processor 1600 of the electronic device 1000 may search for a cellular network by using the remaining cellular communication modules other than a cellular communication module, which may not operate due to the operation of the satellite communication module, among cellular communication modules within the electronic device 1000.

According to an embodiment, a cellular communication module that shares an antenna with the satellite communication module 1100 may not be able to use an antenna used by the satellite communication module 1100 during satellite communication, and a cellular communication module that may not use the antenna used by the satellite communication module 1100 may be excluded from searching for a cellular network.

According to an embodiment, a cellular communication module that shares a power supply unit with the satellite communication module 1100 may not be able to receive power from the power supply unit during satellite communication, and a cellular communication module that does not receive power from the power supply unit that supplies power to the satellite communication module 1100 may be excluded from searching for a cellular network.

For example, the communication processor 1600 of the electronic device 1000 may search for a cellular network by using the second communication module 1120 among the communication modules of FIG. 4. For example, the communication processor 1600 of the electronic device 1000 may search for a cellular network by using the second communication module 1120 among the communication modules of FIG. 5. For example, the communication processor 1600 of the electronic device 1000 may search for a cellular network by using the MH MIMO modules 660 and 661 among the communication modules of FIG. 6A. For example, the communication processor 1600 of the electronic device 1000 may search for a cellular network by using the UHB2 RX modules 750 and 752 among the communication modules of FIG. 6B.

The communication processor 1600 of the electronic device 1000 may determine whether to use the cellular network in operation 850.

According to an embodiment, as the cellular network is searched, the communication processor 1600 of the electronic device 1000 may display a GUI for inquiring whether to use the cellular network on the screen of the electronic device 1000. The communication processor 1600 of the electronic device 1000 may determine whether to use the cellular network, depending on a user input to the GUI for inquiring whether to use the cellular network.

Alternatively, according to an embodiment, as the cellular network is searched, the communication processor 1600 of the electronic device 1000 may determine whether to use the cellular network without displaying the GUI for inquiring whether to use the cellular network.

When it is determined that the cellular network will be used in operation 850, the communication processor 1600 of the electronic device 1000 may perform operation 800. When it is determined that the cellular network will not be used in operation 850, the communication processor 1600 of the electronic device 1000 may transmit and receive a signal by using the satellite communication network in the satellite communication mode.

In operation 860, the communication processor 1600 of the electronic device 1000 may determine whether to end the satellite communication mode. When it is determined to end the satellite communication mode in operation 860, the communication processor 1600 of the electronic device 1000 may perform operation 800.

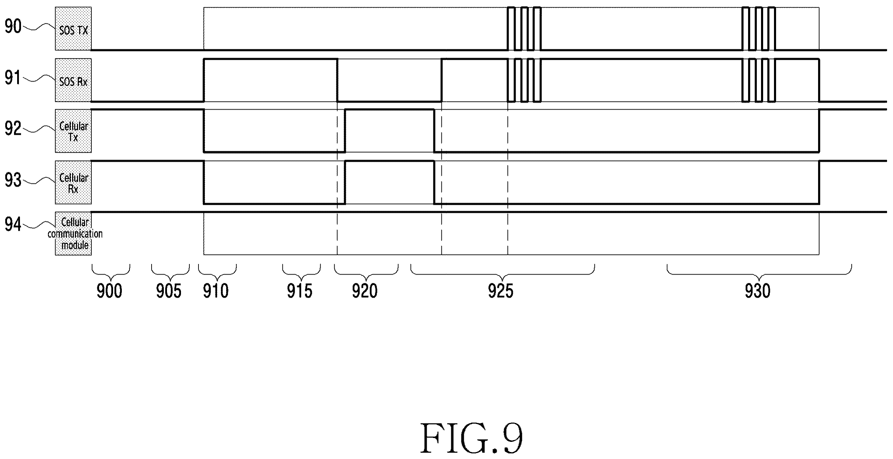

FIG. 9 is a diagram illustrating a process for switching a communication mode of an electronic device between a general communication mode and a satellite communication mode, according to an embodiment of the disclosure.

Referring to FIG. 9, a communication processor 1600 of an electronic device 1000 may switch between a general communication mode and a satellite communication mode of the electronic device 1000, by enabling/disabling at least one of an SOS TX module 90, an SOS RX module 91, a cellular TX module 92, a cellular RX module 93, or a cellular communication module 94 available during satellite communication. The SOS TX module 90 and the SOS RX module 91 correspond to a satellite communication module 1100 for satellite communication, and the cellular TX module 92, the cellular RX module 93, or the cellular communication module 94 may correspond to one of a first communication module 1110, a second communication module 1120, a third communication module, or a fourth communication module 1140 for cellular communication. For example, the cellular TX module 92 and the cellular RX module 93 may be cellular communication modules, which may not operate when the satellite communication module operates, among cellular communication modules. For example, the cellular communication module 94 may be a cellular communication module, which may operate when the satellite communication module operates, among the cellular communication modules. For example, the cellular communication module 94 may be, for example, an Rx MIMO module of cellular communication, but is not limited thereto.

According to an embodiment, at identification number 900, the communication processor 1600 of the electronic device 1000 may be in a state in which the cellular TX module 92, the cellular RX module 93, and the cellular communication module 94 available during satellite communication are enabled and the SOS TX module 90 and the SOS RX module 91 are disabled, in order to perform communication via a cellular network in a general communication mode. The cellular communication module 94 may be a communication module used to search for the cellular network during satellite communication, and may be, for example, an Rx MIMO module of cellular communication, but is not limited thereto. In an SOS situation, the communication processor 1600 of the electronic device 1000 may receive a user input for executing an emergency call, and for the emergency call, the communication processor 1600 of the electronic device 1000 may search for the cellular network.

According to an embodiment, at identification number 905, as a cellular network signal is not searched, the communication processor 1600 of the electronic device 1000 may determine whether to enter a satellite communication mode. For example, when the cellular network signal is not searched, the communication processor 1600 of the electronic device 1000 may determine to enter the satellite communication mode. For example, when the cellular network signal is not searched, the communication processor 1600 of the electronic device 1000 may display a GUI for guiding the execution of the satellite communication mode, and determine to enter the satellite communication mode depending on a user input to the GUI.

According to an embodiment, at identification number 910, when it is determined to enter the satellite communication mode, the communication processor 1600 of the electronic device 1000 may enable the SOS RX module 91, and disable the cellular TX module 92 and the cellular RX module 93. In addition, the cellular communication module 94 may maintain the enabled state.

The communication processor 1600 of the electronic device 1000 that has entered the satellite communication mode may search for a signal of a satellite communication network by using the SOS RX module 91, and transmit and receive a signal via the satellite communication network by using the SOS TX module 90 and the SOS RX module 91. In addition, the communication processor 1600 of the electronic device 1000 may search for a cellular network signal by using the cellular communication module 94 in the satellite communication mode.

According to an embodiment, at identification number 915, when the cellular network signal is searched, the communication processor 1600 of the electronic device 1000 may determine whether to use the cellular network. The communication processor 1600 of the electronic device 1000 may determine whether to use the cellular network in consideration of a user input and/or a specified condition.

For example, when the cellular signal is searched, the communication processor 1600 of the electronic device 1000 may display, on a screen of the electronic device 1000, a GUI for inquiring a user whether to switch a communication mode of the electronic device 1000 from the satellite communication mode to the general communication mode. When a user input for requesting the switching of the communication mode is received via the GUI, the communication processor 1600 of the electronic device 1000 may determine to use the cellular network of the electronic device 1000 in response to the user input. In addition, for example, when the GUI is displayed and the user input for requesting the switching of the communication mode is not received within a preset time, the communication processor 1600 of the electronic device 1000 may automatically determine to use the cellular network of the electronic device 1000. Alternatively, for example, when the strength of the searched cellular network signal is equal to or greater than a specified threshold, the communication processor 1600 of the electronic device 1000 may automatically determine to use the cellular network without requesting the user input via the GUI.

According to an embodiment, at identification number 920, when it is determined to use the cellular network, the communication processor 1600 of the electronic device 1000 may switch the communication mode from the satellite communication mode to the general communication mode. According to an embodiment, the communication processor 1600 of the electronic device 1000 may disable the communication module for satellite communication, and enable the communication module for cellular communication. For example, when the cellular network is searched in the satellite communication mode, the communication processor 1600 of the electronic device 1000 may disable the SOS RX module 91 and then enable the cellular TX module 92 and the cellular RX module 93. Accordingly, the communication mode of the electronic device 1000 may switch from the satellite communication mode to the general communication mode.

According to an embodiment, at identification number 925, the communication processor 1600 of the electronic device 1000 may not be able to search for the cellular network signal. As the cellular network signal is not searched, the communication processor 1600 of the electronic device 1000 may determine to enter the satellite communication mode. When it is determined to enter the satellite communication mode, the communication processor 1600 of the electronic device 1000 may enable the SOS RX module 91, and disable the cellular TX module 92 and the cellular RX module 93. The communication processor 1600 of the electronic device 1000 may not disable the cellular communication module 94. Thereafter, in the satellite communication mode, the communication processor 1600 of the electronic device 1000 may search for a signal of a satellite communication network by using the SOS RX module 91, and transmit and receive a signal via the satellite communication network by using the SOS TX module 90 and the SOS RX module 91. In addition, the communication processor 1600 of the electronic device 1000 may search for a cellular network signal by using the cellular communication module 94 in the satellite communication mode.

According to an embodiment, at identification number 930, the communication processor 1600 of the electronic device 1000 may transmit and receive a signal via the satellite communication network by using the SOS TX module 90 and the SOS RX module 91, and end the satellite communication mode.

In the above description, the operations in FIGS. 8 and 9 are performed by the communication processor 1600 of the electronic device 1000, but are not limited thereto. For example, at least some of the operations in FIGS. 8 and 9 may also be performed by another processor (e.g., processor 120) of the electronic device 1000.

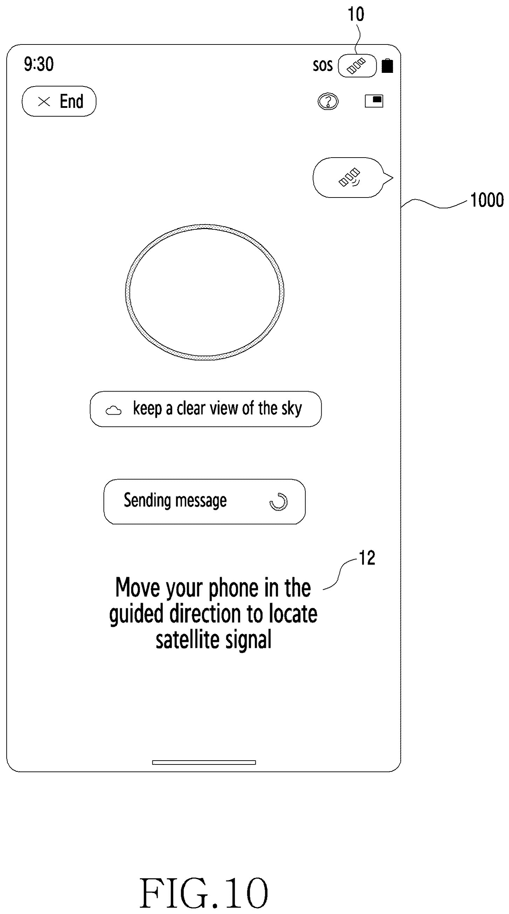

FIG. 10 is a diagram illustrating an example of a GUI displayed on a screen of an electronic device for satellite communication, according to an embodiment of the disclosure.

Referring to FIG. 10, an electronic device 1000 may search for a satellite communication network in order to make an emergency call. In a satellite communication mode, the electronic device 1000 may search for the satellite communication network, and the electronic device 1000 may display, on a screen of the electronic device 1000, an object 10 indicating that a communication mode of the electronic device 1000 is the satellite communication mode. In addition, while being searching for the satellite communication network, the electronic device 1000 may display, on the screen of the electronic device 1000, a text 12 for guiding a user to change the direction of the electronic device 1000 in order to ensure good reception of a satellite communication signal. For example, the electronic device 1000 may display the text 12, such as "Move your phone in the guided direction to locate a satellite signal.", on the screen of the electronic device 1000.

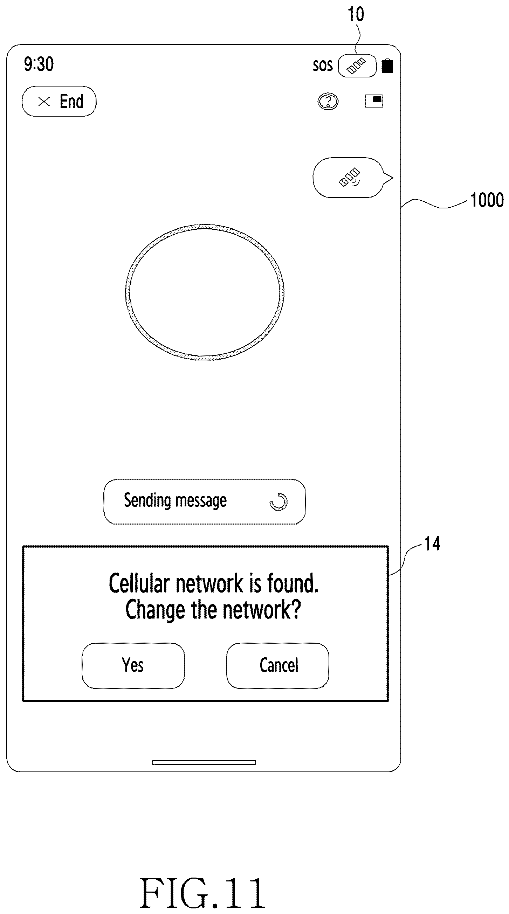

FIG. 11 is a diagram illustrating an example of a GUI for displaying the result of searching for a cellular network in a satellite communication mode, according to an embodiment of the disclosure.

Referring to FIG. 11, an electronic device 1000 may search for a signal of a cellular communication network by using a communication module for cellular communication in a satellite communication mode. As the signal of the cellular communication network is searched in the satellite communication mode, the electronic device 1000 may display, on the screen of the electronic device 1000, a GUI 14 for inquiring a user whether to change a communication mode of the electronic device 1000 to a general communication mode of using the cellular communication network. For example, the electronic device 1000 may display the GUI 14 including a text such as "cellular network is found, Change the network?", on the screen of the electronic device 1000.

Alternatively, as the signal of the cellular communication network is searched in the satellite communication mode, the electronic device 1000 may automatically change the communication mode of the electronic device 1000 to the general communication mode of using the cellular communication network.

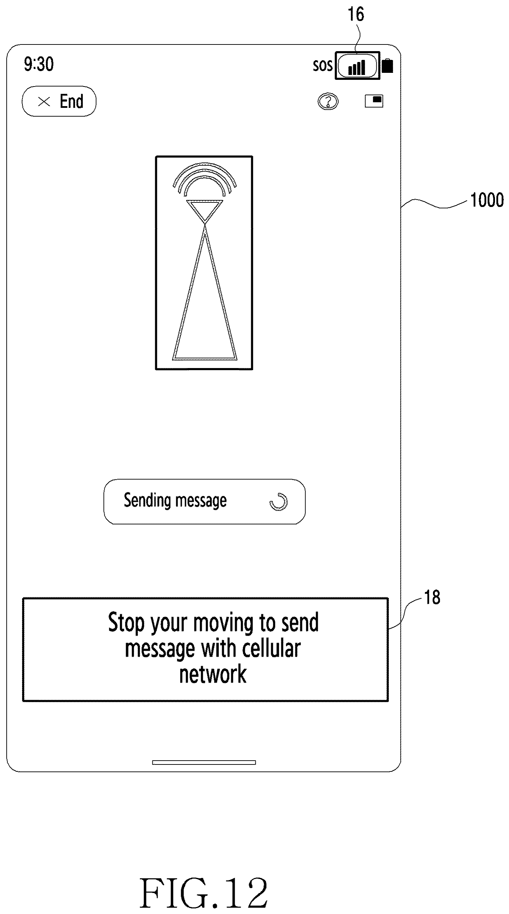

FIG. 12 is a diagram illustrating an example of a GUI displayed on a screen of an electronic device after switching from a satellite communication mode to a general communication mode, according to an embodiment of the disclosure.

Referring to FIG. 12, an electronic device 1000 may change a communication mode of the electronic device 1000 from a satellite communication mode to a general communication mode. As the communication mode of the electronic device 1000 is changed to the general communication mode, the electronic device 1000 may display, on the screen of the electronic device 1000, an object 16 indicating that the communication mode of the electronic device 1000 is the general communication mode. In addition, the electronic device 1000 may display, on the screen of the electronic device 1000, a text 18 for guiding a user not to move the electronic device 1000 to another location, in order to ensure good reception of a signal of a cellular communication network. For example, the electronic device 1000 may display the text 18, such as "Stop your moving to send a message with a cellular network.", on the screen of the electronic device 1000.

As the satellite communication mode is switched to the general communication mode, the electronic device 1000 may transmit and receive a signal (e.g., SOS signal) via the cellular communication network and accordingly, the probability of rescue of a person in distress may increase.

According to an embodiment, a method for searching for a signal of a cellular communication network in an electronic device that is using a satellite communication network may include operation 830 of providing first power from a first power supply unit 1210 and second power from a second power supply unit 1220 to a satellite communication module 1100 for satellite communication, from among the satellite communication module and a first communication module 1110 for first cellular communication, wherein the second power supply unit is configured to provide the second power to one of the satellite communication module and the first communication module, and wherein the satellite communication module and the first communication module are connected to a first antenna, operation 840 of, while the first power and the second power are being supplied to the satellite communication module, supplying third power from a third power supply unit 1230 to a second communication module 1120 for second cellular communication, wherein the second communication module is connected to a second antenna different from the first antenna, and operation 840 of searching for a signal of the second cellular communication received through the second antenna.

According to an embodiment, as an emergency call function of the electronic device is executed, the first power and the second power may be supplied to the satellite communication module, thereby enabling the satellite communication module, and the method may further include operation of transmitting and receiving a signal for an emergency call through the first antenna connected to the enabled satellite communication module.

According to an embodiment, while the first power and the second power are being supplied to the satellite communication module, the third power may be supplied to the second communication module, thereby enabling the second communication module.

According to an embodiment, the operation of searching for the signal of the second cellular communication may include operation of while being transmitting and receiving the signal for the emergency call, searching for the signal of the second cellular communication through the second antenna connected to the enabled second communication module.

According to an embodiment, the first antenna may be shared by the satellite communication module and the first communication module, and be connected to the satellite communication module or the first communication module through a switch.

According to an embodiment, while the first power and the second power are being supplied to the satellite communication module, the first communication module may be disabled.

According to an embodiment, the method may further include operation of disabling a third communication module 1130 that receives the third power from the third power supply unit and is connected to the first antenna, while the first power and the second power are being supplied to the satellite communication module.

According to an embodiment, the method may further include operation of disabling a fourth communication module 1140 that receives the second power from the second power supply unit and is connected to the second antenna, while the first power and the second power are being supplied to the satellite communication module.

According to an embodiment, the second communication module may be a reception (RX) module for receiving a signal of the second cellular communication through the second antenna.

According to an embodiment, the method may further include operation of disabling the satellite communication module and enabling the first communication module, as the signal of the second cellular communication received from the second antenna through the second communication module is searched.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a satellite communication module 1100 for satellite communication;
a first communication module 1110 for first cellular communication;
a second communication module 1120 for second cellular communication;
a first power supply unit 1210 that supplies first power to the satellite communication module;
a second power supply unit 1220 that supplies second power to one of the satellite communication module and the first communication module;
a third power supply unit 1230 that supplies third power to the second communication module;
a first antenna 1310 connected to the satellite communication module and the first communication module from among the satellite communication module, the first communication module, and the second communication module;
a second antenna 1320 connected to the second communication module from among the satellite communication module, the first communication module, and the second communication module; and
a communication processor 1600 connected to the satellite communication module, the first communication module, and the second communication module,
wherein the communication processor controls the first power supply unit and the second power supply unit to supply the first power and the second power to the satellite communication module in order to transmit and/or receive a signal of the satellite communication through the first antenna, and
while the first power and the second power are being supplied to the satellite communication module, the communication processor searches for a signal of the second cellular communication received through the second antenna by supplying the third power to the second communication module.

2. The electronic device of claim 1, wherein the first antenna is shared by the satellite communication module and the first communication module, and is connected to the satellite communication module or the first communication module through a switch.

3. The electronic device of any one of claims 1 and 2, wherein while the first power and the second power are being supplied to the satellite communication module, the first communication module is disabled.

4. The electronic device of any one of claims 1 to 3, further comprising
a third communication module 1130 that receives the third power from the third power supply unit and is connected to the first antenna,
wherein while the first power and the second power are being supplied to the satellite communication module, the third communication module is disabled.

5. The electronic device of any one of claims 1 to 4, further comprising
a fourth communication module 1140 that receives the second power from the second power supply unit and is connected to the second antenna,
wherein while the first power and the second power are being supplied to the satellite communication module, the fourth communication module is disabled.

6. The electronic device of any one of claims 1 to 5, wherein the second communication module is a reception (RX) module for receiving a signal of the second cellular communication through the second antenna.

7. The electronic device of any one of claims 1 to 6, wherein the first power supply unit and the second power supply unit comprise a power management integrated circuit (PMIC) for supplying power to a power amplifier (PA) for signal transmission, and
the third power supply unit comprises a PMIC for supplying power for operations, other than the signal transmission, of other electronic components within the electronic device.

8. The electronic device of any one of claims 1 to 7, wherein as an emergency call mode of the electronic device is executed, the communication processor enables the satellite communication module and the second communication module and disables the first communication module.

9. The electronic device of claim 8, wherein as the signal of the second cellular communication received from the second antenna through the second communication module is searched, the communication processor disables the satellite communication module and enables the first communication module.

10. The electronic device of any one of claims 1 to 8, wherein the satellite communication module comprises at least one of a transmission module for transmitting a signal for the satellite communication and a reception module for receiving a signal for the satellite communication.

11. A method for searching for a signal of a cellular communication network in an electronic device that is using a satellite communication network, the method comprising:
operation 830 of providing first power from a first power supply unit 1210 and second power from a second power supply unit 1220 to a satellite communication module 1100 for satellite communication, from among the satellite communication module and a first communication module 1110 for first cellular communication, wherein the second power supply unit is configured to provide the second power to one of the satellite communication module and the first communication module, and wherein the satellite communication module and the first communication module are connected to a first antenna;
operation 840 of, while the first power and the second power are being supplied to the satellite communication module, supplying third power from a third power supply unit 1230 to a second communication module 1120 for second cellular communication, wherein the second communication module is connected to a second antenna different from the first antenna; and
operation 840 of searching for a signal of the second cellular communication received through the second antenna.

12. The method of claim 11, wherein as an emergency call function of the electronic device is executed, the first power and the second power are supplied to the satellite communication module, thereby enabling the satellite communication module,
the method further comprises
operation of transmitting and receiving a signal for an emergency call through the first antenna connected to the enabled satellite communication module, and
while the first power and the second power are being supplied to the satellite communication module, the third power is supplied to the second communication module, thereby enabling the second communication module.

13. The method of claim 12, wherein the operation of searching for the signal of the second cellular communication comprises operation of
while being transmitting and receiving the signal for the emergency call, searching for the signal of the second cellular communication through the second antenna connected to the enabled second communication module.

14. An electronic device of any one of claims 11 and 12, wherein the first antenna is shared by the satellite communication module and the first communication module, and is connected to the satellite communication module or the first communication module through a switch.

15. The method of any one of claims 11, 12, and 14, wherein while the first power and the second power are being supplied to the satellite communication module, the first communication module is disabled, and
the method further comprises operation of disabling a third communication module 1130 that receives the third power from the third power supply unit and is connected to the first antenna, while the first power and the second power are being supplied to the satellite communication module.
